# EUROPÄISCHE PATENTSCHRIFT

(11) **EP 3 117 359 B1**
(45) Veröffentlichungstag und Bekanntmachung des Hinweises auf die Patenterteilung: **01.04.2020**
(21) Anmeldenummer: 15706466.8
(22) Anmeldetag: 24.02.2015
(51) Int. Cl.: G06Q 20/40, H04L 9/30, H04L 9/32, G06F 21/41

(54) **ID-PROVIDER-COMPUTERSYSTEM, ID-TOKEN UND VERFAHREN ZUR BESTÄTIGUNG EINER DIGITALEN IDENTITÄT**
ID PROVIDER COMPUTER SYSTEM, ID TOKEN, AND METHOD FOR CONFIRMING A DIGITAL IDENTITY
SYSTÈME INFORMATIQUE DE FOURNISSEUR D'IDENTIFIANT, JETON D'IDENTIFIANT ET PROCÉDÉ DE CONFIRMATION D'UNE IDENTITÉ NUMÉRIQUE

(30) Priorität: 14.03.2014 DE 102014204812
(43) Veröffentlichungstag der Anmeldung: 18.01.2017
(73) Patentinhaber: Bundesdruckerei GmbH, 10969 Berlin (DE)
(72) Erfinder: SCHERFENBERG, Ivonne, 10119 Berlin (DE); SCHRÖDER, Martin, 12437 Berlin (DE)
(74) Vertreter: Richardt Patentanwälte PartG mbB
(86) Internationale Anmeldenummer: PCT/EP2015/053799
(87) Internationale Veröffentlichungsnummer: WO 2015/135744

(56) Entgegenhaltungen:
- DE-B3-102011 089 580
- US-A1- 2007 079 136
- US-A1- 2013 305 378

## Beschreibung

Die Erfindung betrifft computerimplementierte Verfahren zur Bestätigung einer digitalen Identität eines Nutzers sowie ein entsprechendes ID-Provider-Computersystem und ID-Token.

Eine zunehmende Anzahl von geschäftlichen und sonstigen Transaktionen wird in elektronischer Form, zum Beispiel über das Internet, durchgeführt. Dies reicht von Bankdienstleistungen (Online-Banking), elektronischem Ticketerwerb, Remote-Zugang zu Firmennetzwerken und vertraulichen Daten, sozialen Netzwerken über Carsharing- oder Autovermietungs-Portale bis hin zu speziellen Sicherungsanlagen, die einzelnen Nutzern in Abhängigkeit von deren digitaler Identität Zugang zu Objekten (z.B. Daten oder Sicherheitsbereiche), die durch die Sicherungsanlage geschützt werden, gewähren.

Voraussetzung für die Durchführung eines Dienstes ist ein durch den Nutzer zu erbringender Nachweis, d.h., Bestätigung, seiner digitalen Identität gegenüber diesem Dienst.

Hier treten erhebliche Interessenkonflikte zwischen Nutzer und Dienstleister auf, die technisch bisher nur unzureichend gelöst werden konnten: so ist der Dienstleister in der Regel daran interessiert, so viele nutzerbezogene Daten wie möglich zu erhalten, und zwar auf eine Art und Weise, die sicherstellt, dass diese Daten auch die tatsächlichen Eigenschaften des Nutzers wiedergeben. Der Dienstanbieter will dadurch sicherstellen, dass er die Person, die den Dienst in Anspruch nimmt, erforderlichenfalls identifizieren und/oder kontaktieren kann, etwa zum Zwecke der Rechnungserstellung oder bei Haftungsfällen. Der Nutzer dagegen hat in der Regel aus Datenschutzgründen Interesse daran, so wenige Daten wie möglich zur Verfügung zu stellen.

Ein Nutzer verwaltet i.d.R. eine Vielzahl verschiedener digitaler Identitäten. Viele Nutzer besitzen mehrere E-Mail-Accounts, wobei lediglich ein Teil dieser Accounts unter dem Realnamen des Nutzers registriert wurden. Viele E-Mail-Adressen bestehen aus Fantasienamen, die keinen Rückschluss auf die reale Person zulassen. Oftmals geben die Nutzer bei der Einrichtung derartiger Mailadressen bewusst einen falschen Wohnort an. Auf der anderen Seite werden elektronische Gesundheitskarten und elektronische Ausweisdokumente immer verbreiteter, die i.d.R. die Preisgabe des Realnamens und einer gültigen Adresse bei der Registrierung bzw. Ausstellung erfordern. Der Nutzer muss also eine Vielzahl von unterschiedlichen Identitäten mit jeweils unterschiedlichen Passwörtern oder sonstigen Zugangsdaten sicher verwalten. Teilweise wird diese Verwaltungsarbeit dem Nutzer durch spezialisierte Identity-Provider Dienstleister abgenommen, die eine Vielzahl von Nutzer-Accounts verwalten können. Diese Verlagerung entlastet den Nutzer zwar im Hinblick auf die sichere Verwaltung seiner Zugangsdaten, löst bzw. lindert den grundsätzlichen Konflikt zwischen dem Interesse der Dienstanbieter an sicheren und vertrauenswürdigen Nutzerdaten einerseits und dem Interesse des Nutzers auf Datenschutz und Anonymität andererseits jedoch nicht:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig an manchen von CardSpace unterstützten Kartentypen ist, dass der Nutzer seine digitale Identität manipulieren kann, so dass dieses System bei Verwendung der Karten des besagten Typs von manchen Diensten als nicht hinreichend vertrauenswürdig angesehen wird. Bei OpenID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

US Patentanmeldung US 20070079136 A1 beschreibt ein Authentifizierungsverfahren das zumindest teilweise auf der Verwendung von Kontextinformationen einer Transaktion basiert. Der Kontext kann bestimmt werden durch verschiedene Regeln die sich auf den Zugang zu den Informationen oder die Fähigkeit, die Transaktion durchzuführen, beziehen. Das Verfahren kann die Registrierung eines Gerätes als vertrauenswürdiges Gerät beinhalten, wobei mehrere Vertrauensniveaus existieren können.

Das Patent DE 102011089580 B3 beschreibt ein Datenverarbeitungssystem mit einem ID-Provider-Computersystem. Das ID-Provider-Computersystem beinhaltet Mittel zum Empfang eines SAML-Request, Mittel zur Authentifizierung des ID-Provider-Computersystems gegenüber einem ID-Token, Mittel zur Durchführung eines Lesezugriffs zum Lesen eines in dem ID-Token gespeicherten Attributs über das Netzwerk nach erfolgreicher Durchführung der Authentifizierung, Mittel zur Erzeugung einer SAML-Response, welche das ausgelesene Attribut, einen Identifikator und eine Adresse beinhaltet, und Mittel zur Speicherung der SAML-Response.

US Patentanmeldung US 20130305378 beschreibt ein Verfahren zur Vermittlung von Vertrauen zwischen einem Dienstanbieter und einem Kunden (Client) des Dienstanbieters. Der Kunde ist mit einer Partei verbunden, die von einem Identitätsanbieter bekannt ist, dem vom Dienstanbieter vertraut wird. Der Identitätsanbieter kontaktiert die Partei und fordert diese auf, sich selbst zu identifizieren. Der Identitätsanbieter bestimmt, ob die Identität des Identifizierungspartners einer von dem Identitätsanbieter für den Teilnehmer gehaltenen Identität entspricht.

Der Erfindung liegt demgegenüber die Aufgabe zugrunde, ein verbessertes Verfahren zur Bestätigung der digitalen Identität eines Nutzers zu schaffen, sowie ein entsprechendes ID-Provider-Computersystem und ID-Token.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Unter einem "Vertrauensniveau" wird im Folgenden eine Menge von ein oder mehreren Parameterwerten verstanden, welche einen Grad der Verlässlichkeit der Zuordnung des Attributwertes zu dem Nutzer und/oder den Grad der Verlässlichkeit auf die Richtigkeit des Attributwertes angeben. Vorzugsweise ist eine vordefinierte Menge von möglichen Vertrauensniveaus zwischen einem ID-Provider-Computersystem und ein oder mehreren Dienst-Computersystemen vereinbart. So könnten beispielsweise die folgenden vier Vertrauensniveaus zwischen dem ID-Provider-Computersystem und mehreren Dienst-Computersystemen vereinbart sein: "L4: sehr hohe Vertrauenswürdigkeit", "L3: erhöhte Vertrauenswürdigkeit", "L2: Standard-Vertrauenswürdigkeit", "L1: Basis-Vertrauenswürdigkeit". Alternativ dazu kann das Vertrauensniveau auch als Prozentwert spezifiziert sein, wobei 100% die Erfüllung höchster Sicherheitsanforderungen impliziert.

Unter einem "Dienst-Computersystem" wird im Folgenden ein Computersystem verstanden, das einen Dienst bereitstellt. Der Dienst kann verschiedenste Hardware- und/oder softwarebasierte Funktionen umfassen, wie etwa die Gewährung eines Zugriffs auf geschützte Gebäude oder Gegenstände oder auf Softwarefunktionen oder Daten. Der Dienst kann ein Online-Dienst, insbesondere ein Clouddienst sein. Das Dienst-Computersystem stellt seinen Dienst jedoch nur an Personen zur Verfügung, die sich gegenüber dem Dienst-Computersystem authentifiziert haben, also dem Dienst-Computersystem einen hinreichend glaubwürdigen Beweis der eigenen digitalen Identität bereitgestellt haben.

Unter einem "Identity(ID)-Provider-Computersystem" wird im Folgenden ein Computersystem verstanden, welches eine digitale Identität eines Nutzers einem Dritten gegenüber bestätigt und/oder diese digitale Identität einem Dritten bereitstellt. Dieser Dritte kann ein weiteres Computersystem sein, das mit dem ID-Provider-Computersystem über ein Netzwerk verbunden ist, z.B. ein Dienst-Computersystem.

Unter "digitale Identität" wird im Folgenden eine Menge aus ein oder mehreren Attributwerten eines Nutzers verstanden, wobei die Attributwerte bestimmte Eigenschaften des Nutzers oder eines mit dem Nutzer in Beziehung stehenden Sachverhalts angeben. Ein Nutzer kann eine oder mehrere digitale Identitäten besitzen. Eine digitale Identität kann aus einer dienstspezifischen Menge an Attributen und deren zugehörigen Werten eines Nutzers bestehen. Ein Nutzer hat also unterschiedliche digitale Identitäten im Hinblick auf unterschiedliche Dienste.

Unter einem "Nutzer", der eine oder mehrere digitale Identitäten besitzt, wird im Folgenden eine natürliche Person verstanden. Wie oben erwähnt, können dieser Person mehrere digitale Identitäten zugeordnet sein. Es ist auch möglich, dass der Nutzer in Auftrag von oder in Vertretung einer juristischen Person handelt. In diesem Fall kann es sein, dass eine oder alle der digitalen Identitäten des Nutzers eine digitale Identität der juristischen Person ist. Der Einfachheit halber wird im Folgenden aber nicht zwischen diesen beiden Fällen unterschieden und die digitale Identität der juristischen Person subsummiert unter der "digitalen Identität des Nutzers", der für die juristische Person handelt.

Unter einem "Nutzer-Computersystem" wird im Folgenden ein Datenverarbeitungssystem, z.B. ein Desktop-PC, ein Notebook oder ein Smartphone verstanden, welches dem Nutzer erlaubt, einen Dienst, der von einem Dienst-Computersystem bereitgestellt wird, über ein Netzwerk, z.B. das Internet, anzufordern.

Ein "ID-Token" kann ein softwarebasiertes oder hardwarebasiertes ID-Token sein. Ein softwarebasiertes ID-Token kann z.B. ein X.509 Zertifikat sein, welches von seinem Aussteller signiert wurde und dessen Signatur von einem Dritten prüfbar ist. Ein softwarebasiertes ID-Token kann auch aus einem SAML-Token bestehen. Ein ID-Token ist einem Nutzer zugeordnet. Ein hardwarebasiertes ID-Token ist ein tragbares elektronisches Gerät, zum Beispiel ein Smartphone, oder ein Dokument, insbesondere ein Wert- oder Sicherheitsdokument, das z.B. in Form einer Chipkarte ausgebildet ist, verstanden. Ein hardwarebasiertes ID-Token umfasst einen Prozessor und ein Speichermedium zur sichern Speicherung von Daten, z.B. von personenbezogenen Attributen oder privaten Schlüsseln. Bei dem hardwarebasierten ID-Token kann es sich um ein papierbasiertes und/oder kunststoffbasiertes Dokument handeln. Darunter fallen zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Bankkarten und Kreditkarten, Frachtbriefe oder sonstige Berechtigungsnachweise, in die ein Datenspeicher und Prozessor integriert ist. Es ist auch möglich, dass das ID-Token und das Nutzer-Computersystem in einem einzigen Gerät realisiert sind, z.B. einem Smartphone. Ein Sicherheitselement des Smartphones kann in diesem Fall als ID-Token fungieren.
Ein "Attribut" ist ein Typ eines Datenwertes wie etwa ,Name', 'Straße', Telefonnummer' und dient als Platzhalter, der mit nutzerspezifischen Attributwerten belegt bzw. assoziiert werden kann. Ein "Attributwert" dagegen ist ein konkreter, einem Nutzer zugeordneter Datenwert, der eine Eigenschaft der digitalen Identität des Nutzers im Hinblick auf ein bestimmtes Attribut angibt. Der Zahlenwert "19" kann also ein Attributwert einer Person für das Attribut "Alter" sein.

In einem Aspekt betrifft die Erfindung ein computerimplementiertes Verfahren zur Bestätigung einer digitalen Identität eines Nutzers gegenüber einem Dienst-Computersystem. Das ID-Provider-Computersystem berechnet automatisch für mehrere Attributwerte jeweils ein Vertrauensniveau. Ein Attributwert ist ein Datenwert für ein Attribut und ist einem Nutzer zugeordnet. Die digitale Identität des Nutzers beinhaltet ein oder mehrere dieser Attributwerte. Ein Vertrauensniveau gibt dabei jeweils einen Grad der Verlässlichkeit der Zuordnung des Attributwertes zu dem Nutzer und/oder den Grad der Verlässlichkeit auf die Richtigkeit des Attributwertes an. Das ID-Provider-Computersystem empfängt eine Anfrage von einem Dienst-Computersystem über ein Netzwerk, zum Beispiel das Internet. Durch die Anfrage soll das ID-Provider-Computersystem veranlasst werden, dem Dienst-Computersystem die digitale Identität des Nutzers zu bestätigen. Auf Empfang der Anfrage ermittelt das ID-Provider-Computersystem automatisch für ein oder mehrere der in der Anfrage enthaltenen Attribute einen zugehörigen Attributwert des Nutzers sowie das für diesen Attributwert berechnete Vertrauensniveau. Daraufhin sendet das ID-Provider-Computersystem eine Antwort an das Dienst-Computersystem über das Netzwerk. Die Antwort beinhaltet die für die Attribute der Anfrage jeweils ermittelten Attributwerte und zugeordneten Vertrauensniveaus. Die Vertrauensniveaus sind ihrem jeweiligen Attributwert als Metadaten zugeordnet. Schließlich prüft das Dienst-Computersystem die digitale Identität des Nutzers durch Auswertung der in der Antwort enthaltenen Attributwerte und der diesen jeweils zugeordneten Vertrauensniveaus. Unter "Metadaten" sind hierbei Daten zu verstehen, die Informationen über Merkmale anderer Daten enthalten, aber nicht diese Daten selbst.

Dieses Verfahren kann in vielerlei Hinsicht vorteilhaft sein:
Der Umstand, dass dem Dienst-Computersystem nicht nur die Attributwerte, sondern auch zugeordnete Vertrauensniveaus bereitgestellt werden, ermöglicht es dem Dienst-Computersystem zu entscheiden, ob das bzw. die Vertrauensniveau(s) für die Attributwerte des Nutzers jeweils einzeln oder in ihrer Gesamtheit als hinreichend vertrauenswürdig erachtet werden, um den Dienst zur Verfügung zu stellen. Die individuelle Vergabe der Vertrauensniveaus für die einzelnen Attributwerte ermöglicht eine besonders feingranulare Darstellung und Kommunikation der Vertrauenswürdigkeit der einzelnen Attributwerte. Somit kann ein Dienst-Computersystem selbst entscheiden, wie wichtig die Richtigkeit eines angegebenen Attributwerts im Hinblick auf den auszuführenden Dienst ist, und automatisch entsprechend reagieren. So sind Angaben über den Besitz und Gültigkeit eines Führerscheins für einen Autovermieter von sehr hoher Wichtigkeit, für einen Online-Shop für Schuhe jedoch nicht. Eine stärkere Entkopplung der von dem ID-Provider verwalteten Attributwerte von den betrieblichen oder technischen Anforderungen der Dienst-Computersysteme wird somit ermöglicht.

Die feingranulare Berechnung der Vertrauensniveaus einzelner Attributwerte kann auch dazu beitragen, den oben erwähnten Konflikt zwischen Sicherheitsbedürfnis des Dienstanbieters und Datenschutzbedürfnissen des Nutzers zu überwinden oder zumindest zu verringern: Um die Richtigkeit eines Attributwertes eines bestimmten Attributs, das einem Dienstanbieter besonders wichtig ist, mit hoher Verlässlichkeit nachzuweisen, musste der Nutzer bisher u.U. ein aufwendiges Verfahren durchlaufen, sich etwa beim Autovermieter persönlich unter Vorlage des Führerscheins ausweisen oder mittels eines sicheren ID-Provider Computersystems eine sehr vertrauenswürdige digitale Identität in ihrer Gesamtheit an den Dienst kommunizieren. Diese Gesamtheit enthielt oftmals deutlich mehr Daten über den Nutzer, als der Dienst notwendigerweise (in technischer, juristischer oder logistischer Hinsicht) von dem Nutzer wissen musste. Die Instanz, die die Daten mit hinreichendem Schutz gegenüber Manipulation sammelte und/oder speicherte, war oftmals eine von dem Dienst unabhängige Instanz, die Datenerfassung geschah also oftmals unspezifisch und es wurden mehr Daten erfasst, als dies für einen bestimmten Dienst notwendig gewesen wäre.

Zudem erfordert eine Vergabe von Vertrauensniveaus auch entsprechende technische Sicherheitsvorkehrung durch den ID-Provider für den Vorgang der Erfassung wie auch der Speicherung der Attributwerte. Für eine Vielzahl von Attributwerten, die für einige wenige Dienste zwar relevant sind, für die Mehrheit an Diensten jedoch nicht, lässt sich durch die attributwertspezifische Vergabe bzw. Berechnung von Vertrauensniveaus der Aufwand zur Erfassung und Speicherung dieser Attributwerte dadurch reduzieren, dass die Attributwerte nicht nach einem "Alles-oder-Nichts" Prinzip des Vertrauens erfasst bzw. gespeichert werden müssen, sondern die Attribute schlichtweg mit denjenigen Vertrauensniveaus assoziiert gespeichert werden können, mit denen sie faktisch verfügbar sind. Ob diese Vertrauensniveaus dann von einem Dienst im Einzelnen als hinreichend betrachtet werden, liegt im Ermessen des Dienstes. Somit kann der ID-Provider von der Aufgabe entlastet werden, möglichst für alle denkbaren Attributwerte eines Nutzers immer jeweils das höchstmögliche Vertrauensniveau bereitzustellen: Da die Niveaus individuell für die durch den ID-Provider vorgehaltenen Attributwerte gespeichert werden, können auch Attributwerte gespeichert und ggf. an einen Dienst zur Verfügung gestellt werden, die ein geringeres Vertrauensniveau besitzen. Dies entlastet den ID-Provider in technischer Hinsicht, da es nun dem Dienst überlassen ist, ob er einem bestimmten Attributwert angesichts dessen zugewiesenen Vertrauensniveau Vertrauen schenken kann. Dies kann zudem auch deshalb zum Interessenausgleich zwischen Dienst-Computersystem und Nutzer führen, da der Nutzer an den Dienst auch Daten zur Verfügung stellen kann, die ein sehr geringes Vertrauensniveau besitzen, die aber dennoch für den Dienst einen gewissen Wert haben. So können beispielsweise auch solche Daten über eine Menge von Kunden für einen Dienst interessant sein, die zwar die realen Kunden nicht völlig exakt beschreiben, aber der Realität doch näher kommen als eine rein auf demographischen Daten basierende Schätzung.

Für den Nutzer kann eine attributwertspezifische Vergabe von Vertrauensniveaus vorteilhaft sein, weil dadurch eine größere Zahl an digitalen Identitäten bereitgestellt werden kann und damit eine größere Anzahl an Diensten in Anspruch genommen werden kann, ohne dass der Nutzer sich bei diesen persönlich registrieren muss: Eine erste digitale Identität (z.B. als registrierter Nutzer eines Bank-Accounts) könnte die Attribute A1, A2 und A3 bzw. die entsprechenden Attributwerte beinhalten und für diese Identität und alle ihre Attributwerte einheitlich ein hohes Vertrauensniveau garantieren. Eine zweite Identität (z.B. als registrierter Kunde eines Online-Shops für Schuhe) könnte die Attribute A1, B1 und B2 beinhalten und für diese Identität und ihre Attributwerte einheitlich nur ein niedriges Vertrauensniveau garantieren. Ein weiterer Dienst, z.B. ein Online-Shop für Elektronik, bei dem sich der Nutzer noch nicht registriert hat, könnte jedoch Attributwert A1 mit hohem Vertrauensniveau und B1 mit zumindest niedrigem Vertrauensniveau erfordern. Weder die erste noch die zweite digitale Identität des Nutzers erfüllen also die Voraussetzungen des weiteren Dienstes: die Vertrauenswürdigkeit der zweiten digitalen Identität ist zu gering im Hinblick auf die Anforderungen des weiteren Dienstes bezüglich A1, und die als hinreichend vertrauenswürdig erachtete erste elektronische Identität enthält nicht B1. Bei im Stand der Technik bekannten Systemen muss sich also der Nutzer einem aufwändigen Registrierungsprozess unterziehen, um eine digitale Identität spezifisch für den weiteren Dienst zu erstellen.

Erfindungsgemäß kann aufgrund der erhöhten Granularität des durch den ID-Provider bestätigten Vertrauens dynamisch eine neue digitale Identität aus der bestehenden ersten und zweiten digitalen Identität generiert werden. Der Nutzer kann sich also u.U. ohne einen vorhergehenden dienstspezifischen Registrierungsprozess gegenüber einem Dienst authentifizieren, wenn nur die Menge an Attributen und deren Vertrauensniveaus, die das ID-Provider-Computersystem schon im Hinblick auf andere Dienste für den Nutzer gesammelt bzw. berechnet hat, ausreicht, den Erfordernissen dieses Dienstes zu genügen. Dies kann vorteilhaft sein, da aufwändige Registrierungsprozeduren dadurch vermieden werden.

Nach Ausführungsformen spezifiziert die Anfrage für ein oder mehrere der in der Anfrage enthaltenen Attribute ein Mindestvertrauensniveau. Falls einem der in der Anfrage enthaltenen Attribute ein Attributwert mit zumindest dem Mindestvertrauensniveau zugeordnet ist, beinhaltet die Antwort diesen ermittelten Attributwert. Falls einem der in der Anfrage enthaltenen Attribute kein Attributwert mit zumindest dem Mindestniveau zugeordnet ist, beinhaltet die Antwort keinen Attributwert für dieses Attribut. Zusätzlich oder alternativ dazu sendet das ID-Provider-Computersystem eine Warnmeldung über die Nichtverfügbarkeit eines Attributwertes mit dem geforderten Mindestniveau im Hinblick auf das eine Attribut an das Dienst-Computersystem.

Dies kann vorteilhaft sein, da das Dienst-Computersystem in die Lage versetzt wird, seine speziellen Sicherheitsbedürfnisse individuell für einzelne Attribute zu spezifizieren. Durch die Mindestvertrauensniveaus als Bestandteil der Anfrage kann dynamisch eine neue digitale Identität des Nutzers nach Bedarf definiert und vom ID-Provider-Computersystem entsprechend assembliert werden. Die in der Antwort zurückgegebenen Attributwerte des Nutzers werden vorzugsweise durch das ID-Provider-Computersystem unabhängig davon ermittelt, von welcher Quelle (Nutzer selbst, ID-Token des Nutzers oder ein weiteres Dienst-Computersystem) die Attributwerte ursprünglich stammen und an das ID-Provider-Computersystem übermittelt wurden. Somit kann z.B. aus einer Vielzahl von Attributen, die aus verschiedenen Quellen mit unterschiedlichen Vertrauensniveaus stammen (Nutzer, ID-Token, andere Dienst-Computersysteme, bei denen sich der Nutzer bereits registriert hat und dort seine Daten in mehr oder weniger sicherer Form hinterlegt hat) eine neue digitale Identität des Nutzers auf Anfrage auch für Dienste bereitgestellt werden, bei denen sich der Nutzer noch nicht registriert hat, aber deren Vertrauensanforderungen im Hinblick auf die für diesen Dienst relevanten Attribute so beschaffen sind, dass sie von den Attributwerten, die dem ID-Provider-Computersystem bereits vorliegen, erfüllt sind. Bei der erfindungsgemäßen Berechnung der jeweiligen Vertrauensniveaus kann die Herkunft der Attributwerte allerdings durchaus eine Rolle spielen.

Nach Ausführungsformen sind die Attribute der Anfrage in einer standardisierten Terminologie, auf die sich das ID-Provider-Computersystem und eine Vielzahl von Dienst-Computersystemen geeinigt haben, spezifiziert. Diese Terminologie kann aus einem einfachen, standardisierten Thesaurus bestehen aber auch in komplexen Ontologien spezifiziert sein, z.B. mittels RDF-Schema, Web Ontology Language (OWL), Web Service Modeling Language (WSML) oder Topic Maps (ISO/IEC 13250:2000). Außerdem kann das ID-Provider-Computersystem nach manchen Ausführungsformen eine Schnittstelle für die Dienst-Computersysteme anbieten, um Attributwerte eines Nutzers, die gemäß dieser standardisierten Terminologie spezifiziert sind, an das ID-Provider-Computersystem zu übertragen. Die Verwendung eines standardisierten Thesaurus bzw. einer standardisierten Ontologie stellt sicher, dass Attributwerte, die von einem bestimmten Dienst verarbeitet, dem ID-Provider-Computersystem zur Verfügung gestellt oder von dem ID-Provider-Computersystem abgefragt und empfangen werden, ggf. auch durch andere Dienst-Computer verwendet werden können, um eine durch das ID-Provider-Computersystem dynamisch assemblierte digitale Identität des Nutzers zu empfangen.

Nach Ausführungsformen ermittelt das ID-Provider-Computersystem für eines der in der Anfrage enthaltenen Attribute mehrere Attributwerte mit zumindest dem Mindestvertrauensniveau. Das ID-Provider-Computersystem stellt fest, ob es sich in einem ersten oder zweiten Konfigurationszustand befindet. Falls sich das ID-Provider-Computersystem im ersten Konfigurationszustand befindet, beinhaltet die Antwort des ID Provider Computersystems diejenigen Attributwerte und deren Vertrauensniveaus, welchen das höchste Vertrauensniveau von den mehreren Attributwerten dieses Attributs zugeordnet ist. Falls sich das ID-Provider-Computersystem im zweiten Konfigurationszustand befindet, beinhaltet die Antwort des ID Provider Computersystems diejenigen Attributwerte und deren Vertrauensniveaus, welchen das geringste Vertrauensniveau von den mehreren Attributwerten dieses Attributs zugeordnet ist, und welches aber dennoch zumindest dem Mindestniveau genügt. Die Konfiguration kann dem einzelnen Nutzer überlassen sein, wobei die Konfiguration dann nutzerspezifische Wirkung hat, oder einem Administrator des ID-Provider-Computersystems.

Dies kann vorteilhaft sein, da das ID-Provider-Computersystem die angeforderte digitale Identität des Nutzers im Hinblick auf zwei unterschiedliche Erfordernisse ausrichten kann: soll vor allem das Interesse des Dienstes berücksichtigt werden, so kann für jedes angeforderte Attribut derjenige Attributwert zurückgeliefert werden, der das höchste Vertrauensniveau besitzt. Da pro Attribut auch mehrere Attributwerte für einen Nutzer vorliegen können (die z.B. auf unterschiedlichen Wegen, von unterschiedlichen weiteren Dienst-Computersystemen oder nach unterschiedlich sicheren Authentifizierungsverfahren an das ID-Provider-Computersystem übermittelt wurden), wird so sichergestellt, dass immer die Attributwerte zurückgegeben werden, die das höchste Vertrauensniveau besitzen, um dem Dienst die größtmögliche Verlässlichkeit im Hinblick auf die Vertrauenswürdigkeit der einzelnen Attribute zu bieten.

Soll dagegen vor allem das Interesse des Nutzers am Schutz seiner Daten Vorrang haben, wird dann, wenn mehrere Attributwerte für das gleiche angefragte Attribut zur Verfügung stehen, derjenige Attributwert in der Antwort zurückgegeben, dem das niedrigste Vertrauensniveau zugewiesen ist, welches allerdings das angeforderte Mindestvertrauensniveau noch erfüllen muss. Attributwerte mit niedrigem Vertrauensniveau können beispielsweise Attributwerte sein, die der Nutzer willentlich manipulieren kann oder konnte. Bei solchen Attributwerten muss damit gerechnet werden, dass der Nutzer hier willentlich oder unwillentlich (Tippfehler) falsche Daten angibt. Dieses Vorgehen ist in vielen Fällen durchaus gerechtfertigt, da beispielsweise mache Online-Dienste einen Nutzer zwingen, eine Vielzahl von Daten preiszugeben, damit ein Online-Formular als ausgefüllt' gilt und abgeschickt werden kann, auch wenn diese Daten mit der Erbringung des Dienstes eigentlich wenig zu tun haben. Dadurch, dass der Attributwert mit dem niedrigst möglichen, vom Dienst noch akzeptierten Vertrauensniveau zurückgegeben wird, kann der Datenschutz gefördert werden: ein Online-Shop hat beispielsweise schon anhand der vorliegenden Kreditkartennummer eine verlässliche Information darüber, dass ein Nutzer volljährig und voll geschäftsfähig ist, möchte jedoch zusätzlich noch das genaue Alter für Werbezwecke erfragen. Der Online-Shop kann das Alter des Nutzers als Attribut in die Anfrage an den ID-Provider-Computersystem integrieren, kann aber durch die Wahl eines sehr niedrigen Sicherheitsniveaus für diese Angabe sicherstellen, dass die angestrebte Transaktion, also z.B. ein Kaufvertrag, nicht daran scheitern wird, dass der Nutzer sein wirkliches Alter nicht preisgeben will. Das erforderliche Mindestniveau könnte dem Nutzer eine Manipulation des Attributs ermöglicht haben. Der Dienst wird in so einem Fall von Nutzern, die ohne Bedenken ihr Alter preisgeben möchten, deren reales Alter erfahren. Von Nutzern die dies aus Datenschutzgründen nicht möchten, wird der Dienst nur eine unzuverlässige, da vom Nutzer manipulierbare, Altersangabe erhalten, so dass beiden Seiten gedient ist.

Die Antwort ist nach manchen Ausführungsformen als SAML-Response ausgestaltet. Die Metadaten, die den ein oder mehreren Attributwerten zugeordnet sind, sind jeweils Teil einer SAML-Assertion. Die Vertrauensniveaus der ein oder mehreren Attributwerte sind in der SAML-Assertion jeweils in Form eines speziellen Attributtyps kodiert. Der spezielle Attributtyp gehört dabei zu einer Menge von ein oder mehreren speziellen Attributtypen, die zwischen dem ID-Provider-Computersystem und einem oder mehreren Dienst-Computersystemen vereinbart wurden. Die zwischen dem ID-Provider-Computersystem und dem Dienst-Computersystem vereinbarte Attributtyp könnte also "Vertrauensniveau" heißen und auf lediglich vier mögliche Attributwerte "L1" - "L4" beschränkt sein. Alternativ sind auch gröbere oder noch feinere Aufschlüsselungen möglich.

Die Spezifikation als Attributtyp von SAML-Assertions kann vorteilhaft sein, da auf diese Weise die Anfrage und die Antwort standardkonform bleibt und damit leicht in bestehende Strukturen für den Identitätsnachweis gegenüber Dienst-Computersystemen integrierbar ist. Im Folgenden sollen zwei alternative Spezifikationsmöglichkeiten innerhalb einer SAML2.0 Assertion beispielhaft dargestellt sein. Hervorhebungen dienen lediglich der besseren Lesbarkeit:

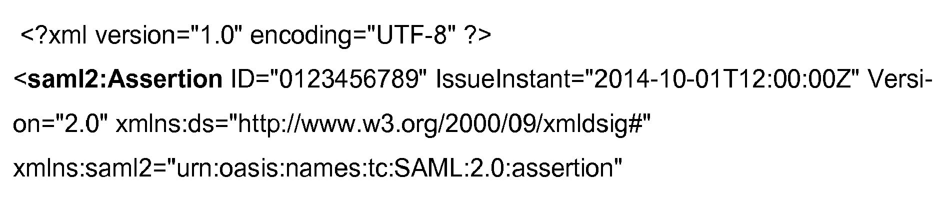

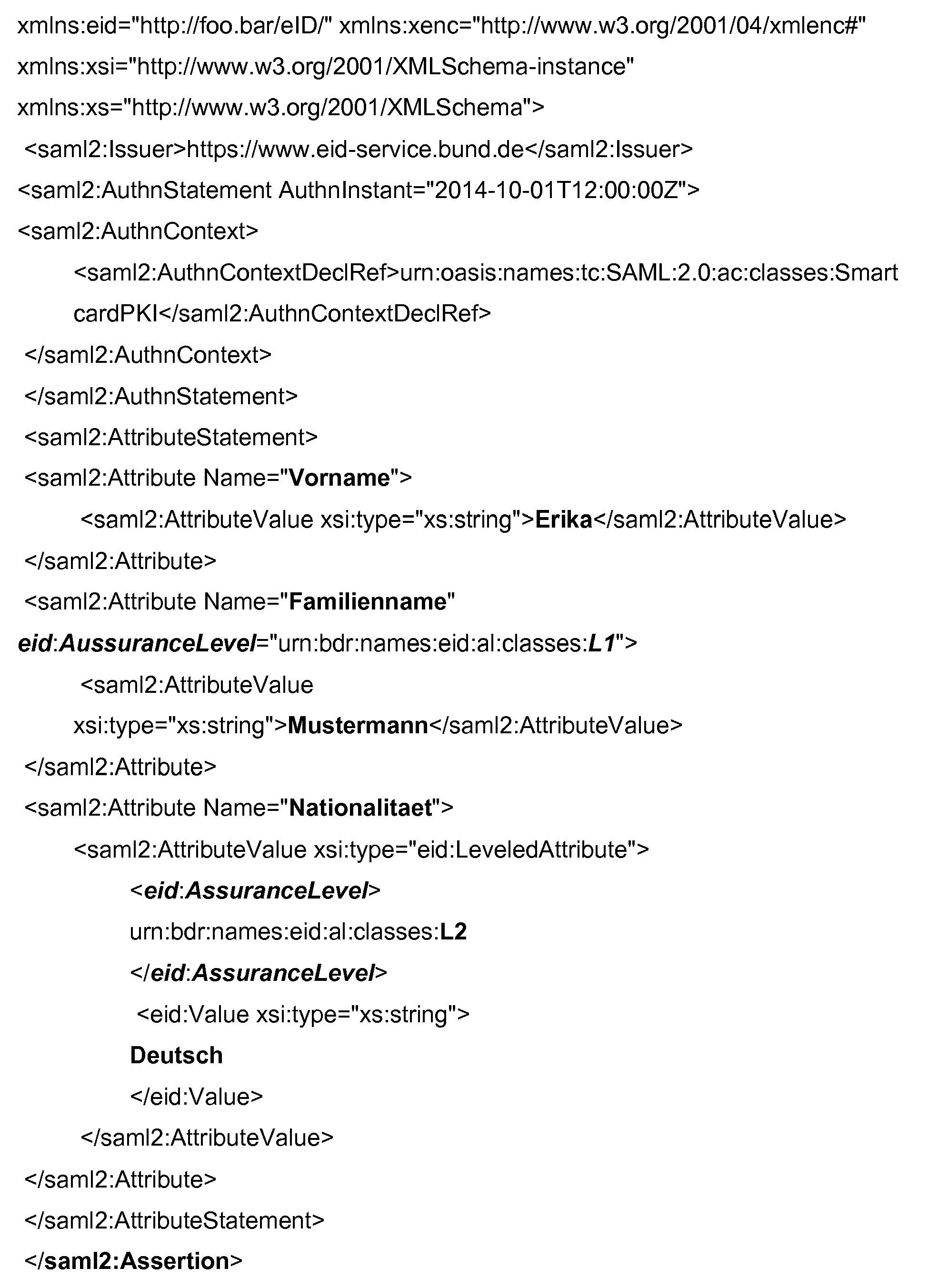

Gemäß einer ersten Möglichkeit wird das Vertrauensniveau "L1" für den Attributwert "Mustermann" des Attributs "Familienname" als zusätzliches XML Attribut innerhalb des Attribute-Elements für Familienname spezifiziert. Dies ist vorteilhaft, da diese Spezifikationsform standardkonform ist, der SAML2.0 Standard muss also nicht erweitert werden.

Gemäß einer alternativen Möglichkeit, die hier der Einfachheit halber innerhalb der gleichen SAML2.0 Assertion dargestellt ist, wird das Vertrauensniveau "L2" für den Attributwert "Deutsch" des Attributs "Nationalitaet" dadurch spezifiziert, dass das Vertrauensniveau als zusätzliches XML-Kind-Element des Attribut-Elements "Nationalitaet" spezifiziert wird. Auch der entsprechende Attributwert "Deutsch" wird zum Kind-Element.

Somit ist es möglich, existierende, auf SAML-basierende Systeme zum Nachweis der digitalen Identität eines Nutzers so zu erweitern, dass auch attributspezifische Vertrauensniveaus unterstützt werden, ohne hierfür den SAML2.0 Standard erweitern und/oder die existierenden Systeme grundlegend umgestalten zu müssen.

Die SAML-Antwort sollte mit einem Zertifikat des ID-Provider-Computersystems signiert sein und einen Prüfschlüssel enthalten,

Nach Ausführungsformen wird die Berechnung der Vertrauensniveaus der Attributwerte in Reaktion auf den Empfang der Anfrage durchgeführt. Alternativ dazu kann die Berechnung der Vertrauensniveaus der Attributwerte auch vor dem Empfang der Anfrage durchgeführt werden, z.B. im Moment des Empfangs der Attributwerte von dem Nutzer oder einem externen Datenverarbeitungsgerät. Das ID-Provider-Computersystem speichert schließlich die ein oder mehreren Attributwerte verknüpft mit den jeweils berechneten Vertrauensniveaus in einer Datenbank.
Dies kann vorteilhaft sein, da das ID-Provider-Computersystem am akkuratesten bestimmen kann, wie vertrauenswürdig die eigene technische und organisatorische Infrastruktur ist, wie sicher die verwendeten Datenübertragungswege zum Empfang der Attributwerte sind, und ob ggf. noch weitere Faktoren vorliegen, die die Vertrauenswürdigkeit von Attributwerten beeinflussen. Eine Berechnung der Vertrauensniveaus unmittelbar nach Empfang der Anfrage kann so geschehen, dass selektiv nur die Vertrauensniveaus der Attributwerte desjenigen Nutzers berechnet werden, auf welchen sich die Anfrage bezieht. Dies kann den Vorteil haben, dass Rechenkapazitäten geschont werden, denn möglicherweise hat das ID-Provider-Computersystem eine Vielzahl von Attributwerten gespeichert, die niemals von einem Dienst zum Nachweis der digitalen Identität angefordert werden oder sich öfter ändern und neuberechnet werden müssten als sie angefragt werden. Alternativ kann die Berechnung auch bei Empfang der Attributwerte stattfinden. Falls die Attributwerte eines Nutzers oder die Attributwerte verschiedener Nutzer von dem ID-Provider-Computersystem über einen Zeitraum zufallsverteilt empfangen werden, wird auch die Rechenlast zufallsverteilt gestreut und Lastspitzen werden vermieden.

Nach Ausführungsformen stellt das ID-Provider-Computersystem eine oder mehrere Schnittstellen bereit und empfängt ein oder mehrere der Attributwerte über die eine oder die mehreren Schnittstellen. Beim Empfang der Attributwerte erfasst das ID-Provider-Computersystem, welche der einen oder der mehreren Schnittstellen zur Übertragung der empfangenen Attributwerte jeweils verwendet wurde. Die Berechnung der Vertrauensniveaus der Attributwerte umfasst, für jedes der besagten Attributwerte, eine automatische Feststellung, über welche der ein oder mehreren Schnittstellen der Attributwert durch das ID-Provider-Computersystem empfangen wurde. Das berechnete Vertrauensniveau des Attributwertes ist umso höher je stärker die zur Übertragung des Attributwerts verwendete Schnittstelle gegenüber Datenmanipulation durch den Nutzer selbst oder durch Dritte geschützt ist.
Dies kann vorteilhaft sein, da sich herausgestellt hat, dass die Art der zur Übertragung der Attributwerte verwendeten Schnittstellen einen erheblichen Einfluss auf die Vertrauenswürdigkeit in die Richtigkeit der Attributwerte hat.

Der Schutz vor Datenmanipulation schließt dabei vorzugsweise sowohl die Datenmanipulation durch unberechtigte Dritte wie auch den Nutzer selbst ein, denn auch der Nutzer kann verleitet sein, sich durch Manipulation seiner Daten (Alter, Wohnort, etc.) eine manipulierte digitale Identität zu verschaffen, die ihm Zugang zu einem Dienst gewährt, der ihm andernfalls nicht zugänglich gemacht würde. Das Mieten von Autos über einen Car-Sharing-Dienst hat beispielsweise neben Volljährigkeit auch den Besitz eines gültigen Führerscheins zur Voraussetzung und der Car-Sharing-Dienst weist ein Auto nur dann einem anfragenden Nutzer zu, wenn diese Voraussetzungen zutreffen und das Sicherheitsniveau dieser Attributwerte auch mit hinreichender Wahrscheinlichkeit garantiert, dass weder der Nutzer noch ein Anderer diese Attributwerte manipulieren konnte.

Die Schnittstellen können beispielsweise aus einer GUI, die dem Nutzer das Editieren, Ergänzen und Löschen bereits durch das ID-Provider-Computersystem gespeicherter Daten ermöglicht (z.B. in einem über das Internet bereitgestellten HTML-Formular bzw. Editor-Maske) und einer Schnittstelle zum automatischen Auslesen nutzerspezifischer Attributwerte aus einem ID-Token des Nutzers bestehen. Eine Schnittstelle zum automatischen Auslesen von Daten aus einem ID-Token schützt die Daten sowohl vor der Manipulation durch unberechtigte Dritte als auch vor Manipulation durch den Nutzer, zumindest bei Typen von Sicherheitstoken, bei welchen der Nutzer seine darin gespeicherten Daten nicht oder nicht ohne Zustimmung einer vertrauenswürdigen Instanz verändern kann.

Nach Ausführungsformen umfassen die mehreren Schnittstellen zumindest eine erste und eine zweite Schnittstelle. Die erste Schnittstelle ermöglicht eine manuelle Eingabe der Attributwerte durch den Nutzer zur Übertragung der Attributwerte über das Netzwerk an das ID-Provider-Computersystem. Die zweite Schnittstelle ermöglicht das Auslesen von einem oder mehreren der Attributwerte aus einem dem Nutzer zugeordneten ID-Token über das Netzwerk durch das ID-Provider-Computersystem. Das ID-Provider-Computersystem empfängt eine erste Teilmenge der Attributwerte über die erste Schnittstelle durch das Provider-Computersystem und eine zweite Teilmenge der Attributwerte über die zweite Schnittstelle. Die Berechnung der Vertrauensniveaus erfolgt derart, dass das Vertrauensniveau von über die zweite Schnittstelle empfangenen Attributwerten höher ist als von über die erste Schnittstelle empfangenen Attributwerten.

Dies kann vorteilhaft sein, da mehrere Schnittstellen zum Empfang der Attributwerte bereitgestellt werden und die Datenakquise durch das ID-Provider-Computersystem dadurch erleichtert wird. Auch Schnittstellen, die bisher als wenig vertrauenswürdig galten, wie etwa Schnittstellen zur manuellen Dateneingabe, werden genutzt, ohne das Vertrauensniveau der digitale Identität insgesamt notwendigerweise zu reduzieren, denn die Attributwerte, die über die erste Schnittstelle empfangen wurden, erhalten zwar ein niedrigeres Vertrauensniveau, dadurch, sind jedoch die über eine andere Schnittstelle empfangenen Attribute nicht betroffen und für manche Dienste mag ein geringes Vertrauensniveau mancher Attributwerte ja akzeptabel sein.

Nach Ausführungsformen speichert das ID-Provider-Computersystem die Attributwerte der ersten und zweiten Teilmenge, z.B. in einer Datenbank. Die Attributwerte werden dabei mit ihren jeweils unter Berücksichtigung der jeweils zum Empfang verwendeten Schnittstellen berechneten Vertrauensniveaus verknüpft gespeichert. Das ID-Provider-Computersystem stellt die erste Schnittstelle an den Nutzer zur Ermöglichung des manuellen Editierens der Attributwerte sowohl der ersten als auch der zweiten Teilmenge bereit. Falls der Nutzer eines der Attributwerte der zweiten Teilmenge manuell editiert führt das ID-Provider-Computersystem automatisch eine Neuberechnung des Vertrauensniveaus des editierten Attributwertes durch. Dies geschieht derart, dass der editierte Attributwert behandelt wird, als wäre er über die erste Schnittstelle empfangen worden.

Dies kann vorteilhaft sein, da dies dem Nutzer auf eine einfache Weise eine Aktualisierung seiner Attributwerte ermöglicht, wie dies etwa im Hinblick auf die Wohnadresse ja oftmals vorkommt. Der Nutzer kann seine Attributwerte also editieren unabhängig davon, ob diese ursprünglich durch manuelle Eingabe oder durch automatisches Auslesen aus einem ID-Token wie etwa einem elektronischen Personalausweis an das ID-Provider-Computersystem übertragen wurden. Falls er dies jedoch für Attributwerte tut, die ursprünglich über eine manipulationssichere Schnittstelle an das ID-Provider-Computersystem übertragen wurden, wird das Vertrauensniveau der editierten Attribute automatisch entsprechend herabgesetzt. Möchte der Nutzer dies vermeiden, kann er auf entsprechend sicherere Datenübertragungsverfahren und Schnittstellen zur Aktualisierung seiner Daten zurückgreifen.

*Nach Ausführungsformen muss sich der Nutzer* gegenüber dem ID-Provider-Computersystem mittels eines Authentifizierungsverfahren authentifizieren, um nach erfolgreicher Authentifizierung Attributwerte an das ID-Provider-Computersystem zu übertragen oder Attributwerte zu editieren, die bereits in einem an das ID-Provider-Computersystem operativ gekoppelten Speichermedium gespeichert sind. Falls der Nutzer sich erfolgreich authentifiziert hat, erfasst das ID-Provider-Computersystem automatisch, für jedes der übertragenen oder editierten Attributwerte, welches Authentifizierungsverfahren für die Übertragung oder für das Editieren der bereits übertragenen Attributwerte durchgeführt wurde. Die Verlässlichkeit der Zuordnung des Attributwertes zu dem Nutzer hängt von dem verwendeten Authentifizierungsverfahren ab. Die Berechnung der Vertrauensniveaus erfolgt dergestalt, dass die berechneten Vertrauensniveaus umso höher sind, je höher die Sicherheitsanforderungen des zur Übertragung oder zum Editieren des Attributwertes jeweils verwendeten Authentifizierungsverfahrens sind.

Dies kann vorteilhaft sein, da die automatische Berücksichtigung des verwendeten Authentifizierungsverfahrens die Exaktheit der berechneten Vertrauensanker weiter steigert. Bisherige Systeme hatten es Nutzern von vornherein unmöglich gemacht, Attribute mittels unsicherer Authentifizierungsverfahren und/oder Datenmanipulationsschnittstellen nachträglich zu ändern um die Vertrauenswürdigkeit der digitalen Identität des Nutzers hoch zu halten. Mit den vorliegenden Merkmalen ist eine solche Manipulation möglich, reduziert aber selektiv das Vertrauensniveau der betroffenen Attributwerte.

Das ID-Provider-Computersystem kann eine Vielzahl von Authentifizierungsverfahrenen bereitstellen, die zumindest zwei der folgenden Authentifizierungsverfahren umfassen: Passwort-basierte Verfahren, ID-Token-basierte Verfahren, und auf Biometrie basierende Authentifizierungsverfahren.

Die Berechnung der Vertrauensniveaus erfolgt nach Ausführungsformen derart, dass die Vertrauensniveaus von nach Passwort-basierter Authentifikation übertragenen oder editierten Attributwerten geringer sind als die von nach ID-Tokenbasierter oder Biometrie-basierter Authentifikation übertragenen oder editierten Attributwerten. Im Einzelfall ist es jedoch auch möglich, dass beispielsweise biometriebasierte Verfahren als weniger sicher angesehen werden als passwortgestützte Authentifizierungsverfahren, z.B. wenn das Passwort lang ist und eine Mischung von Zahlen, Buchstaben und Sonderzeichen enthält. Nach Ausführungsformen erfolgt die Berechnung der Vertrauensniveaus derart, dass die Vertrauensniveaus um so höher sind, je mehr unterschiedliche Authentifikationsverfahren angewandt wurden (,multifaktorielle Authentifikation') um die Attributwerte, für die die Vertrauensniveaus berechnet wurden, zu übertragen oder editierten.

Nach Ausführungsformen speichert das ID-Provider-Computersystem Attributwerte, die nach einer erfolgreichen Authentifikation des Nutzers mittels eines ersten Authentifizierungsverfahrens übertragen oder editiert wurden, z.B. in einer Datenbank. Hierbei werden die Attributwerte mit ihren jeweils unter Berücksichtigung des verwendeten ersten Authentifizierungsverfahrens berechneten Vertrauensniveaus verknüpft gespeichert. Es folgt eine erneute Authentifizierung des Nutzers gegenüber dem ID-Provider-Computersystem mittels eines zweiten Authentifizierungsverfahrens zu einem späteren Zeitpunkt. Das ID-Provider-Computersystem erfasst automatisch, falls ein oder mehrere der bereits gespeicherten Attributwerte nach Authentifizierung des Nutzers über das zweite Authentifizierungsverfahren überschrieben werden, z.B. durch eingegebene Daten oder durch automatisch aus einem ID-Token des Nutzers ausgelesene Daten. Das ID-Provider-Computersystem berechnet daraufhin automatisch die Vertrauensniveaus der neuen Attributwerte unter Berücksichtigung des verwendeten zweiten Authentifizierungsverfahrens neu. Bietet das zweite Authentifizierungsverfahren eine höhere Sicherheit im Hinblick auf Schutz vor Datenmanipulation und/oder Sicherstellung der wahren Identität des sich authentifizierenden Nutzers als das erste Authentifizierungsverfahren, wird das Vertrauensniveau der nach der zweiten Authentifizierung übertragenen oder editierten Attributwerte erhöht. Bietet das zweite Authentifizierungsverfahren eine geringere Sicherheit im Hinblick auf die vorgenannten Faktoren als das erste Authentifizierungsverfahren, sind die Vertrauensniveaus der betroffenen Datenwerte verringert.

Nach Ausführungsformen gehen in die Berechnung des Vertrauensniveaus der jeweiligen Attributwerte auch ein Sicherheitsgrad der technischen Infrastruktur und/oder ein Sicherheitsgrad der organisatorischen Infrastruktur des ID-Provider-Computersystems ein, welche bei der Ermittlung des Attributwertes durch das ID-Provider-Computersystems verwendet wird. Die Integrität der Attributwerte und/oder der Identität des Nutzers und/oder die Verlässlichkeit der Richtigkeit der Zuordnung von Attributwert und Nutzer werden durch den Sicherheitsgrad der technischen und/oder organisatorischen Infrastruktur bestimmt. Zu der technischen Infrastruktur können etwa kryptographische Algorithmen, die die Attributwerte verschlüsseln und entschlüsseln, Firewall-Systeme, Sicherheitstechnische Vorkehrungen zum Schutz des Serverraums, in dem das ID-Provider-Computersystem steht, gehören. Zu der organisatorischen Infrastruktur kann die verbindliche Einhaltung des Vier-Augen-Prinzips durch das technische Betriebspersonal bei Wartung des ID-Provider-Computersystems oder andere betriebliche Abläufe gehören, die die Sicherheit der durch das ID-Provider-Computersystem verwalteten Daten erhöhen.

Das Sicherheitsniveau eines Attributwerts kann z.B. berechnet werden unter Verwendung der folgenden Inputdaten: einem Indikator der zur Übertragung oder zum Editieren des Attributwerts verwendeten Schnittstelle; einem Indikator des für die Übertragung oder für das Editieren des Attributwerts verwendeten Authentifizierungsverfahrens; einem Indikator des Sicherheitsgrades der oben erwähnten technischen und/oder organisatorischen Infrastruktur; und/oder einem Indikator des Betreibers des ID-Provider-Computersystems oder eines weiteren Dienst-Computersystems, von welchem die durch das ID-Provider-Computersystem ermittelten Attributwerte empfangen wurden. Jedes der Vertrauensniveaus besteht aus einer Menge von ein oder mehreren der oben genannten Indikatoren oder besteht alternativ dazu aus einem einzelnen Datenwert, welcher einer vordefinierten Sicherheitsstufe aus einer Menge von vordefinierten Sicherheitsstufen entspricht und aus einem oder einer beliebigen Kombination der oben genannten Indikatoren abgeleitet ist.

Auch das Mindestvertrauensniveau eines Attributwerts kann in entsprechender Form spezifiziert sein, also z.B. in Form eines Indikators einer oder mehrerer Schnittstellen, die zur Übertragung oder zum Editieren des Attributwerts verwendet wurden und als hinreichend sicher gegen Datenmanipulation gelten; eines Indikators einer oder mehrerer für die Übertragung oder für das Editieren des Attributwerts verwendeten Authentifizierungsverfahrens, die als hinreichend sicher gelten; eines Indikators eines mindestens erforderlichen Sicherheitsgrades der oben genannten technischen und/oder organisatorischen Infrastruktur; oder eines Indikators eines als vertrauenswürdig geltenden ID-Provider-Computersystems oder weiteren Dienst-Computersystemen, die dem ID-Provider-Computersystem als Quelle der Attributwerte dienten. Das Mindestvertrauensniveau ist spezifiziert als ein einzelner Datenwert, welcher einer vordefinierten Sicherheitsstufe aus einer Menge von vordefinierten Sicherheitsstufen entspricht und aus einem oder mehreren der oben genannten Indikatoren abgeleitet ist, also beispielsweise "L1" für "Basis-Vertrauensniveau", "L2" für "Standard-Vertrauensniveau", "L3" für "erhöhtes Vertrauensniveau und "L4", "L5" usw. für "sehr hohes" oder "höchstes" Vertrauensniveau. Alternativ dazu kann das Mindestvertrauensniveau auch aus einer Kombination mehrerer der oben genannten Indikatoren bestehen.

Nach Ausführungsformen werden zumindest einige der Attributwerte des Nutzers von dem ID-Provider-Computersystem von einem dem Nutzer zugeordneten ID-Token ausgelesen und durch das ID-Provider-Computersystem gespeichert. Das Auslesen der Attributwerte aus dem ID-Token durch das ID-Provider-Computersystem umfasst: Authentifizierung des ID-Token gegenüber dem ID-Provider-Computersystem; Authentifizierung des ID-Provider-Computersystems gegenüber dem ID-Token; nach erfolgreicher gegenseitiger Authentifizierung des ID-Tokens und des ID-Provider-Computersystems, Lesezugriff des ID-Provider-Computersystems auf ein oder mehrere in dem ID-Token gespeicherte Attributwerte; und Signierung der ein oder mehreren gelesenen Attributwerte durch das ID-Provider-Computersystem. Die Antwort des ID-Provider-Computersystems beinhaltet ein Zertifikat, welches einen öffentlichen Schlüssel enthält, welches dem Dienst-Computer eine Prüfung der Signatur der aus dem ID-Token gelesenen Attribute ermöglicht.

In einem weiteren Aspekt betrifft die Erfindung ein computerimplementiertes Verfahren zur Bestätigung einer digitalen Identität eines Nutzers gegenüber einem Dienst-Computersystem. Das Verfahren umfasst eine automatische Berechnung eines Vertrauensniveaus jeweils für Attributwerte von Attributen durch ein ID-Provider-Computersystem. Die digitale Identität des Nutzers beinhaltet ein oder mehrere der Attributwerte. Das ID-Provider-Computersystem empfängt eine Anfrage zur Bestätigung der digitalen Identität des Nutzers über ein Netzwerk von dem Dienst-Computersystem. Die Anfrage enthält ein Attribut oder mehrere der Attribute des Nutzers. Auf den Empfang der Anfrage hin ermittelt das ID-Provider-Computersystem jeweils einen Attributwert für ein oder mehrere der Attribute der Anfrage. Jeder der ermittelten Attributwerte ist dem Nutzer zugeordnet. Das ID-Provider-Computersystem berechnet ein Vertrauensniveau für jedes der ermittelten Attributwerte durch das ID-Provider-Computersystem. Das Vertrauensniveau gibt jeweils einen Grad der Verlässlichkeit der Zuordnung des Attributwertes zu dem Nutzer und/oder den Grad der Verlässlichkeit auf die Richtigkeit des Attributwertes an. Das ID-Provider-Computersystem sendet eine Antwort an das Dienst-Computersystem über das Netzwerk. Die Antwort enthält für ein oder mehrere der Attribute der Anfrage zumindest den ermittelten Attributwert und das diesem zugeordnete Vertrauensniveau. Die Vertrauensniveaus sind ihrem jeweiligen Attributwert als Metadaten zugeordnet.

In einem weiteren Aspekt betrifft die Erfindung ein computerimplementiertes Verfahren zur Bestätigung einer digitalen Identität eines Nutzers gegenüber einem Dienst-Computersystem. Das Verfahren umfasst das Senden einer Anfrage zur Bestätigung der digitalen Identität des Nutzers durch ein Dienst-Computersystem über ein Netzwerk an ein ID-Provider-Computersystem. Die Anfrage enthält ein oder mehrere Attribute. Die digitale Identität des Nutzers beinhaltet ein oder mehrere der Attributwerte. Das Dienst -Computersystem empfängt eine Antwort auf die Anfrage von dem ID-Provider-Computersystem über das Netzwerk. Die Antwort enthält jeweils einen Attributwert für ein oder mehrere der in der Anfrage enthaltenen Attribute, wobei jeder der Attributwerte dem Nutzer zugeordnet ist. Die Antwort beinhaltet ferner für ein oder mehrere der Attributwerte ein Vertrauensniveau das jeweils einen Grad der Verlässlichkeit der Zuordnung des Attributwertes zu dem Nutzer und/oder den Grad der Verlässlichkeit auf die Richtigkeit des Attributwertes angibt. Das Dienst-Computersystem prüft die digitale Identität des Nutzers durch automatische Auswertung sowohl der in der Antwort enthaltenen Attributwerte als auch der jeweils zugeordneten Vertrauensniveaus.

In einem weiteren Aspekt betrifft die Erfindung ein ID-Provider-Computersystem, das einen Prozessor und ein computerlesbares Speichermedium beinhaltet. Das Speichermedium hat computerinterpretierbare Instruktionen gespeichert, welche bei Ausführung durch den Prozessor dazu in der Lage sind, ein Verfahren zur Bestätigung einer digitalen Identität eines Nutzers gegenüber einem Dienst-Computersystem bereitzustellen. Das Verfahren umfasst: automatische Berechnung von Vertrauensniveaus jeweils für Attributwerte von Attributen, wobei die digitale Identität des Nutzers ein oder mehrere der Attributwerte beinhaltet und wobei das Vertrauensniveau jeweils einen Grad der Verlässlichkeit der Zuordnung des Attributwertes zu dem Nutzer und/oder den Grad der Verlässlichkeit auf die Richtigkeit des Attributwertes angibt. Das ID-Provider-Computersystem empfängt eine Anfrage zur Bestätigung der digitalen Identität des Nutzers über die Netzwerkschnittstelle von dem Dienst-Computersystem, wobei die Anfrage ein oder mehrere Attribute enthält. Auf den Empfang der Anfrage hin ermittelt das ID-Provider-Computersystem jeweils einen der Attributwerte und das diesem zugeordnete Vertrauensniveau für ein oder mehrere der Attribute der Anfrage, wobei jeder der ermittelten Attributwerte dem Nutzer zugeordnet ist. Das ID-Provider-Computersystem sendet eine Antwort an das Dienst-Computersystem über das Netzwerk, wobei die Antwort für ein oder mehrere Attribute der Anfrage jeweils zumindest den ermittelten Attributwert und das diesem zugeordnete Vertrauensniveau beinhaltet, wobei die Vertrauensniveaus ihrem jeweiligen Attributwert als Metadaten zugeordnet sind.

In einem weiteren Aspekt betrifft die Erfindung ein ID-Token, das einem Nutzer zugeordnet ist und welches einen Prozessor, ein Sicherheitselement und einen Speicher mit computerausführbaren Instruktionen beinhaltet. Das ID-Token ist bei Ausführung der Instruktionen durch den Prozessor dazu ausgebildet, nach erfolgreicher Authentifizierung des Nutzers und des ID-Provider-Computersystem gegenüber dem ID-Token die ein oder mehreren Attributwerte und die diesen jeweils zugeordnete Vertrauensniveaus von dem ID-Provider-Computersystem anzufordern. Außerdem ist das ID-Token bei Ausführung der Instruktionen dazu ausgebildet, in Reaktion auf Erhalt einer Anfrage des Dienst-Computersystems, die ein oder mehrere Attribute enthält, die für diese Attribute im Sicherheitselement gespeicherten Attributwerte und deren jeweils zugeordnete Vertrauensniveaus aus dem Sicherheitselement zu lesen und an das Dienst-Computersystem zu übertragen. Dies kann vorteilhaft sein, da das ID-Token zumindest teilweise die Funktion des ID-Provider-Computersystems übernehmen kann, indem es Attributwerte und zugehörige Vertrauensniveaus, die ursprünglich von dem ID-Provider-Computersystem berechnet wurden, speichert und bei Bedarf an das Dienst-Computersystem überträgt um die digitale Identität des Nutzers zu bestätigen. Falls ein Dienst-Computersystem z.B. keine Internetverbindung besitzt, z.B. weil es Bestandteil einer Hochsicherheitsanlage ist, kann der Nutzer seine digitale Identität dennoch mittels des ID-Tokens in feingranularer Weise nachweisen.

In einem weiteren Aspekt betrifft die Erfindung ein Datenverarbeitungssystem, das zumindest ein ID-Provider-Computersystem nach einer der erwähnten Ausführungsformen, ein oder mehrere Dienst-Computersysteme, ein Nutzer-Computersystem und einen ID-Token umfasst. Das Nutzer-Computersystem erlaubt es dem Nutzer, den Dienst von dem Dienst-Computersystem über ein Netzwerk anzufordern. Das ID-Token ist dem Nutzer zugeordnet und erlaubt dem Nutzer eine ID-Token-basierte Authentifikation gegenüber dem ID-Provider-Computersystem.

Im Weiteren werden Ausführungsformen der Erfindung mit Bezugnahme auf die Zeichnungen näher erläutert. Es zeigen:
- Figur 1: ein Blockdiagramm eines mit einem Dienst-Computersystem verbundenen ID-Provider-Computersystems,
- Figur 2: ein Blockdiagramm eines Anfrage-Antwort Zyklus unter Berücksichtigung eines Mindestvertrauensniveaus,
- Figur 3: ein Blockdiagramm eines verteilten Systems zum Identitätsnachweis eines Nutzers gegenüber einem Dienst,
- Figur 4: Tabellen mit möglichen Inputwerten zur Berechnung der Vertrauensniveaus, und
- Figur 5: ein Flussdiagramm eines Verfahrens zur Prüfung einer digitalen Identität.

Elemente der nachfolgenden Ausführungsformen, die einander entsprechen, werden mit denselben Bezugszeichen gekennzeichnet.

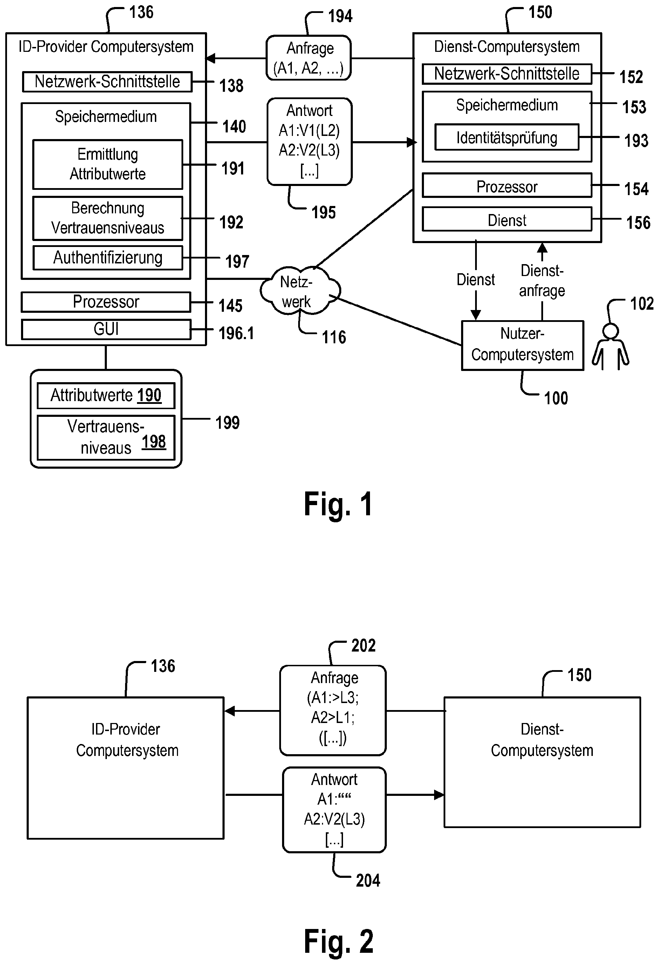

Die **Figur 1** zeigt ein verteiltes Computersystem umfassend ein Dienstcomputersystem 150 und ein ID-Provider-Computersystem 136, welches es einem Nutzer 102 ermöglicht, sich mithilfe seines Nutzer-Computersystems 100 gegenüber dem Dienst-Computersystem als berechtigt auszuweisen und den Dienst 156 in Anspruch zu nehmen. Der Dienst 156 könnte beispielsweise ein KFZ-Verleih sein. Der Kfz-Verleih stellt ein HTML Formular, zum Beispiel als Bestandteil eines Web-Portals, bereit, welches in einem Browser des Nutzer-Computersystems dargestellt werden kann. Nutzer, welche sich bereits in der Vergangenheit bei dem Kfz-Verleih registriert haben, bekommen über dieses Formular die Möglichkeit, sich beispielsweise mittels Nutzername und Passwort gegenüber dem Dienst 156 zu authentifizieren. Der Registrierungsprozess beinhaltet typischerweise die Vorlage eines Personalausweises und eines gültigen Führerscheins. Durch Eingabe des bei der Registrierung festgelegten Nutzernamens und Passworts stellt der Nutzer 102 seine digitale Identität gegenüber dem Dienst-Computersystem unter Beweis, die im vorliegenden Fall etwa besteht aus dem Namen des Nutzers, seiner Anschrift, das Vorliegen eines gültigen Führerscheins und Volljährigkeit.

Um auch Nutzern, die sich noch nicht bei dem Kfz-Verleih registriert haben, aber beispielsweise ihre digitale Identität mit allen für den Kfz-Verleih relevanten Angaben (Adresse, Führerschein, Volljährigkeit) bei einem ID-Provider-Computersystem in hinreichend sicherer Form nachgewiesen und dort hinterlegt haben (etwa im Zuge einer Registrierung bei einem anderen Kfz-Verleih, im Zuge des Führerschein-Erwerbs etc.) die Nutzung des Dienstes ohne aufwändigen Registrierungsprozess spontan zu ermöglichen, beinhaltet das Dienst-Computersystem 150 auch eine Schnittstelle 152 zum Datenaustausch mit dem ID-Provider-Computersystem 136, um dem Nutzer 102 zusätzlich oder alternativ zu dem HTML Formular eine Authentifizierung mit Hilfe des ID-Provider-Computersystems zu ermöglichen. Durch Klick auf einen Button oder ein anderes Element der Web-Seite des Dienst-Computersystems kann der Nutzer beispielsweise bewirken, dass das Dienst-Computersystem 150 eine Anfrage 194 an das ID-Provider-Computersystem sendet. Die Anfrage 194 enthält alle Attribute A1, A2,..., deren Kenntnis durch das Dienst-Computersystem als notwendig angesehen wird, um dem Nutzer 102 den Dienst 156 bereitzustellen, also dem Nutzer beispielsweise Zugang zu einem bestimmten Kfz zu gewähren.

Das ID-Providercomputersystem empfängt über die Schnittstelle 138 die Anfrage 194 und führt mit dem Prozessor 145 Programmlogik aus, die auf dem Speichermedium 140 gespeichert ist. Die Programmlogik beinhaltet ein Modul 191 zur Ermittlung der Attributwerte 190, die dem Nutzer 102 zugeordnet sind und die sich auf in der Anfrage 194 enthaltene Attribute A1, A2,..., beziehen. Bei dieser Gelegenheit werden außerdem attributspezifische Vertrauensniveaus 198, die den besagten Attributwerten zugeordnet sind, ermittelt. Die Vertrauensniveaus 198 sind in einem nicht-flüchtigen Speicher 199, zum Beispiel einer relationalen Datenbank, gespeichert. Für die Berechnung der einzelnen Vertrauensniveaus 198 verfügt das ID-Provider Computersystem 136 ebenfalls über ein entsprechendes Modul 192. Außerdem kann das ID-Provider-Computersystem eine graphische Benutzeroberfläche 196.1 über das Netzwerk 116 an den Nutzer 102 zur Verfügung zu stellen um dem Nutzer zu ermöglichen, zumindest einige der für ihn gespeicherten Attributwerte 190 nachträglich manuell zu bearbeiten.

Nachdem das ID-Provider-Computersystem 136 die dem Nutzer 102 zugeordneten Attributwerte V1, V2 .... der in der Anfrage 194 spezifizierten Attribute A1, A2, .. und die diesen zugeordneten Vertrauensniveaus 198 ermittelt hat, generiert das ID-Provider-Computersystem eine Antwort 195, welche die ermittelten Attributwerte und zugeordneten Vertrauensniveaus enthält. Die Antwort 195 wird über das Netzwerk 116 an das Dienst-Computersystem 150 gesendet. Die in der Antwort enthaltenen Attributwerte stellen die digitale Identität des Nutzers 102 dar. Typischerweise hat der Nutzer mehrere verschiedene digitalen Identitäten, um sich gegenüber verschiedenen Diensten zu identifizieren, denn die Anforderungen der verschiedenen Dienste (Bankdienstleistungen, Auto-Verleih, Zugriff auf geschützte Patientendaten zum Beispiel durch einen Arzt, Zutritt zu geschützten Gebäuden und Räumen zum Beispiel das Sicherheitspersonal, online-Shops) unterscheiden sich. Diejenigen Attribute, die das Dienstcomputersystem in der Anfrage 194 spezifiziert, sind diejenigen Attribute, deren Attributwerte für den speziellen Dienst 156 besonders wichtig sind und welche die digitale Identität des Nutzers 102 in Bezug auf diesen Dienst 156 ausmachen.

Auf einem nicht-flüchtigen Speichermedium 153 des Dienst-Computersystems sind Programminstruktionen in Form eines Moduls zur Identitätsprüfung 193 gespeichert, die der Prüfung der digitalen Identität des Nutzers 102 dienen. Zum Beispiel kann das Modul 193 die empfangenen Attributwerte und deren Vertrauensniveaus mit Referenzwerten vergleichen, die das Dienst-Computersystem 150 gespeichert hat. In Abhängigkeit von dem Ergebnis dieses Vergleichs wird die digitale Identität des Nutzers 102 als authentisch und vertrauenswürdig angesehen und dem Nutzer der Dienst 156 zur Verfügung gestellt, oder die digitale Identität des Nutzers wird als nicht vertrauenswürdig angesehen und der Dienst dem Benutzer versagt. Der oder die Referenzwerte werden üblicherweise im Zuge der Registrierung des Nutzers bei dem Dienst hinterlegt. Der Vergleich mit einem Referenzwert ist jedoch nicht immer notwendig. Der Nutzer kann in manchen Fällen auch ohne vorhergehende Registrierung den Dienst in Anspruch nehmen, wenn er nur dem Dienst-Computersystem diejenigen Attributwerte, die für den Dienst die digitale Identität des Nutzers ausmachen, hinreichend vertrauenswürdig nachweisen kann. Das Dienst-Computersystem könnte die übermittelte digitale Identität speichern, um z.B. für Rechnungs- oder Haftungszwecke darauf zugreifen zu können, und dann den Dienst ohne einen Vergleich mit einem Referenzwert bereitstellen.

Figur 2 zeigt eine alternative Spezifikation einer Anfrage 202, welche neben den Attributen A1, A2, A3, [...], auch für zumindest einige dieser Attribute jeweils ein Mindest-Vertrauensniveau enthält. Beispielsweise müssen die Attributwerte für das angeforderte Attribut A1 mit einem Vertrauensniveau von mehr als "L3" und für das angeforderte Attribut A2 mit einem Vertrauensniveau von mehr als "L1" dem ID-Provider-Computersystem vorliegen und zurückgegeben werden. Liegt ein angeforderter Attributwert nicht mit einem mindestens geforderten Vertrauensniveaus verknüpft vor, wird er nicht als Bestandteil der Antwort 204 zurückgegeben, wie dies exemplarisch für Attribut A1 gezeigt ist, und/oder es erfolgt eine entsprechende Warnmeldung an das Dienst-Computersystem 150.

Es ist auch möglich, dass für ein bestimmtes Attribut A2 mehrere Attributwerte des Nutzers gespeichert sind. So könnte in der Datenbank 199 für das Attribut "Postleitzahl" und dem Nutzer 102 mehrere Attributwerte/Postleitzahlen gespeichert sein, falls der Nutzer umgezogen ist und/oder neben seiner Privatanschrift auch eine berufliche Anschrift hinterlegt hat. In Abhängigkeit von verschiedenen Faktoren kann das Modul 192 für die verschiedenen Attributwerte des gleichen Attributs unterschiedliche Vertrauensniveaus berechnet haben. Je nach Konfiguration des ID-Provider-Computersystems wird dann der Attributwert mit dem höchsten oder mit dem niedrigsten berechneten Vertrauensniveau in der Antwort 204 zurückgegeben, solange nur sichergestellt ist, dass das Vertrauensniveau des zurückgegebenen Attributwerts dem geforderten Mindestvertrauensniveau für das entsprechende Attribut A2 erfüllt.

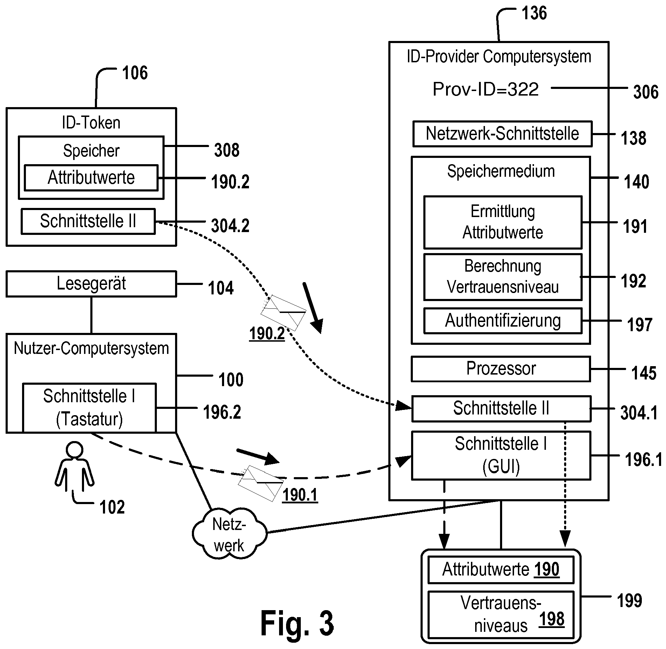

**Figur 3** zeigt ein Blockdiagramm eines ID-Provider-Computersystems 136, welches über verschiedene Schnittstellen 196, 304 Attributwerte von einem Nutzer 102 empfangen kann. Für die übertragenen Attributwerte wird jeweils ein Vertrauensniveau berechnet um diese verknüpft mit den jeweiligen Attributwerten in einem Datenspeicher 199 zu speichern. Außerdem kann das ID-Provider-Computersystem eine oder mehrere unterschiedliche Authentifizierungsverfahren mittels entsprechender Module 197 für den Nutzer 102 bereitstellen, da eine Übertragung und Speicherung von Attributwerten an das ID-Provider-Computersystem nur dann zugelassen wird, wenn der Nutzer sich gegenüber dem ID-Provider-Computersystem erfolgreich authentifiziert hat, das heißt, seine Identität dem ID-Provider-Computersystem erfolgreich nachgewiesen hat. Der Typ der zur Datenübertragung verwendeten Schnittstelle 304,196 und/oder der Typ des verwendeten Authentifizierungsverfahrens können, neben weiteren Faktoren, durch Modul 192 bei der Berechnung der Vertrauensniveaus der übertragenen Attributwerte des Nutzers berücksichtigt werden und gehen in das berechnete Vertrauensniveau ein.

Dem Nutzer ist ein ID-Token 106 zugewiesen, welcher einen Speicher 308 enthält, auf welchem Attributwerte 190.2 des Nutzers in geschützter Form gespeichert sein können. Bei dem ID-Token kann es sich beispielsweise um einen elektronischen Personalausweis des Nutzers oder ein Smartphone mit Sicherheitselement handeln.

Die Authentifizierungsverfahren 197 können ein oder mehrere biometrische Verfahren (Fingerabdruck, Iris-Scan, Stimmenprofile etc.), Passwort-geschützte und/oder ID-Token-basierte Verfahren oder andere Authentifizierungsverfahren sein. ID-Token-gestützte Authentifizierungsverfahren beinhalten, dass der Nutzer durch Besitz eines speziellen Hardwaremoduls, das z.B. durch den ID-Provider herausgegeben oder personalisiert wurde, sich gegenüber dem ID-Provider-Computersystem authentifiziert. Bei dem zur Authentifizierung verwendeten ID-Token kann es sich um den gleichen oder einen anderen ID-Token verwenden, der die Attributwerte 190.2 des Nutzers gespeichert hat. Je nachdem wie sicher das Authentifizierungsverfahren ist, das vor der Übertragung von Attributwerten des Nutzers an den Server verwendet wurde, desto höher ist das für diese Attributwerte durch Modul 192 berechnete Vertrauensniveau. Biometrische oder ID-Token-basierte Authentifizierungsverfahren resultieren i.d.R. in einem höheren berechneten Vertrauensniveau 198 als passwortbasierte Verfahren.

Neben einer Vielzahl von Authentifizierungsverfahren kann das ID-Provider-Computersystem dem Nutzer auch eine Vielzahl von Schnittstellen zur Datenübertragung bereitstellen, die in manchen Implementierungsbeispielen frei mit den einzelnen Authentifizierungsverfahren kombinierbar sind. So kann ein Authentifizierungsverfahren mit einem bestimmten Sicherheitsniveau (sicher im Hinblick auf die Identität des Nutzers) mit einer Schnittstelle zur Datenübertragung kombiniert werden, die ein bestimmtes Sicherheitsniveau (sicher im Hinblick auf den Schutz der Daten vor Manipulation) bietet, wobei für die übertragenen Attribute ein abgeleitetes Vertrauensniveau berechnet wird, das sich aus dem Sicherheitsniveaus des verwendeten Authentifizierungsverfahrens wie auch der verwendeten Datenübertragungsschnittstelle zusammensetzt.

Schnittstelle 196.1 kann beispielsweise eine graphische Benutzeroberfläche in Form eines HTML Formulars sein, dass durch das ID-Provider-Computersystem über das Netzwerk 116 und das Nutzer-Computersystem 100 dem Nutzer angezeigt wird. Der Nutzer gibt über eine entsprechende Schnittstelle 196.2, zum Beispiel Tastatur und/oder Maus, neue Attributwerte ein oder editiert und modifiziert bereits in dem Speicher 199 gespeicherte Attributwerte, die im zugeordnet sind. Da der Nutzer willentlich oder unwillentlich hierbei die Attribute modifizieren kann, beispielsweise ein Alter angeben, das nicht seinen realen Alter entspricht, führt die Verwendung dieser Art von Schnittstelle in diesem System zu einem verringerten Vertrauensniveau der übertragenen Attributwerte. Schnittstellen 304.1 und 304.2 ermöglichen, nach gegenseitiger Authentifizierung von ID-Provider-Computersystem und ID-Token, ein Auslesen zumindest einiger der Attributwerte aus dem Speicher 308 des ID-Tokens zur Übertragung an das ID-Provider-Computersystem.

Das ID-Provider-Computersystem kann bereits einige Attributwerte in Speicher 199 gespeichert haben. Auch berechnete Vertrauensniveaus 198 können bereits gespeichert vorliegen. Nach erfolgreicher Authentifizierung des Nutzers kann dieser einige der gespeicherten Attributwerte über Schnittstelle 196 editieren, wobei vorzugsweise deren jeweils zugeordnetes Vertrauensniveau automatisch neu berechnet und gespeichert wird. Es ist auch möglich, dass der Empfang der Anfrage 194, 202 erst den Empfang von einigen der Attribute und die Berechnung von deren Vertrauensniveau initiiert. So kann nach Empfang der Anfrage das ID-Provider-Computersystem ermitteln, ob die angeforderten Attributwerte für den Nutzer vorliegen oder mit dem in der Anfrage spezifizierten Mindestvertrauensniveau vorliegen. Hierzu kann das Modul 191 auf den Speicher 199 lesend zugreifen und dessen Inhalt auswerten. Falls die angeforderten Attributwerte nicht vorliegen oder nicht mit einem hinreichend hohem Vertrauensniveau verknüpft vorliegen, kann das ID-Provider-Computersystem eine gegenseitige Authentifizierung von ID-Provider-Computersystem und ID-Token einleiten um zumindest die angeforderten, nicht vorhandenen Attributwerte von dem ID-Token zu empfangen, deren Vertrauensniveau zu berechnen, in Speicher 199 zu speichern und der Antwort 195, 204 hinzuzufügen.

Es ist zudem auch möglich, dass nach der Berechnung der Vertrauensniveaus zumindest ein Teil der vom ID-Provider-Computersystem verwalteten Attributwerte samt zugeordneten Vertrauensniveaus an das ID-Token übertragen werden, um einen Nachweis der digitalen Identität des Nutzers mittels des ID-Tokens unabhängig von dem Netzwerk 116 und der Verfügbarkeit des ID-Provider-Computersystems zu ermöglichen.

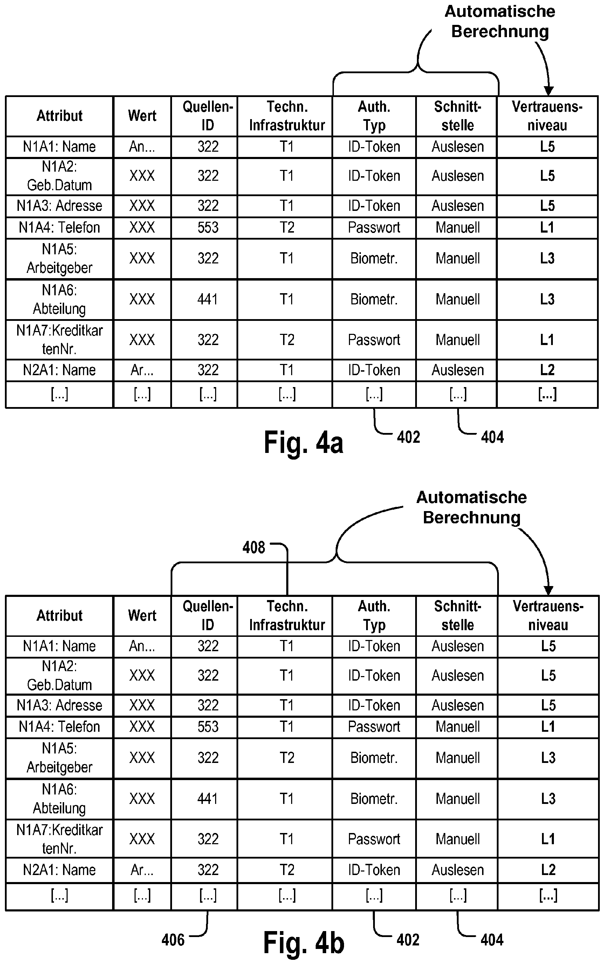

**Figuren 4a und 4b** zeigen Tabellen mit Spalten, deren Werte als Input in die Berechnung der attributspezifischen Vertrauensniveaus durch Modul 192 eingehen können. Die Attribute und Vertrauensniveaus können in Speicher 199 beispielsweise in Form einer Tabelle gespeichert sein. Einem Nutzer mit Nutzer-ID N1 sind sieben Attribute von A1 "Name" bis A7 "Kreditkartennummer" zugeordnet, wobei die Tabelle jedoch die Attributwerte einer großen Vielzahl an Nutzern N2, ..., enthalten kann. In der Spalte "Wert" sind die dem Attribut und dem Nutzer zugeordneten Attributwerte gespeichert. In Spalte "Quellen-ID" ist eine Kennung von externen Computersystemen, z.B. weiteren Dienst-Computersystemen, angegeben, von welcher die Attributwerde durch das ID-Provider-Computersystem empfangen wurden. Der Wert "322", die Kennung des ID-Provider-Computersystems selbst, impliziert, dass die Attributwerte innerhalb einer vom Operator des ID-Provider-Computersystems bereitgestellten Sicherheitsinfrastruktur generiert wurden, also beispielsweise innerhalb des Rechenzentrums, in welchem das ID-Provider-Computersystem steht. Die technische Infrastruktur kann je nach deren Sicherheitsniveau in verschiedene Klassen T1, T2, ..., unterteilt sein. Das ID-Provider-Computersystem kann beispielsweise ein verteiltes Computersystem innerhalb eines sicheren Rechenzentrums bestehend aus mehreren Rechnern sein. Rechner, die bei der Generierung, Speicherung oder Verwaltung der Attributwerte, beim Authentifizierungsprozess oder beim Datenempfang beteiligt waren, können in Abhängigkeit von der verwendeten Firewall, der Stärke verwendeter kryptographischer Schlüssel, und anderer Faktoren unterschiedliche Sicherheitsniveaus haben, die alle in den Identifikator "T" für die technische Infrastruktur eingehen. Die Spalte "Auth. Typ" enthält Informationen darüber, welches Authentifizierungsverfahren vor der Übertragung der Attributwerte an das ID-Provider-Computersystem bzw. vor dem Editieren bereits übertragener Daten zur Authentifizierung des Nutzers gegenüber dem ID-Provider-Computersystem verwendet wurde. Die Spalte "Schnittstelle" beinhaltet die zur Übertragung verwendete Schnittstelle, z.B. "manuell" bei Attributwerten, die über eine GUI wie z.B. ein HTML Formular übertragen oder nach Übertragung editiert wurden, oder "Auslesen", falls der Attributwert automatisch aus dem ID-Token ausgelesen wurde. Eine Zeile entspricht dabei einem Datensatz für einen Attributwert. Es ist möglich, dass ein Nutzer mehrere Attributwerte und entsprechende Datensätze für ein bestimmtes Attribut besitzt. In der Spalte "Vertrauensniveau" befinden sich Vertrauensniveaus "L1" - "L5", die jeweils aus den Zellenwerten der Spalten 402 und 404 des entsprechenden Datensatzes (Fig. 4a) oder aus den Zellenwerten der Spalten 402 - 408 des entsprechenden Datensatzes (Fig. 4b) berechnet wurden. Je nach Implementierungsvariante können auch noch weitere oder andere Werte in die Berechnung der Vertrauensniveaus einfließen.

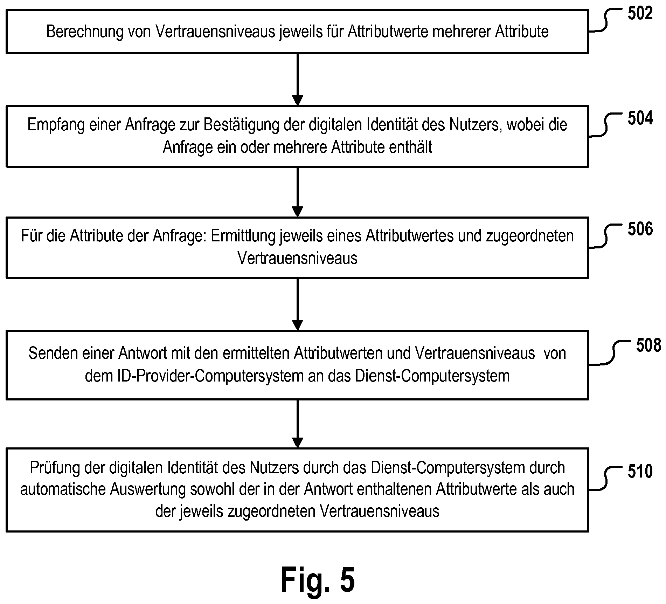

**Figur 5** zeigt ein Flussdiagramm eines computerimplementierten Verfahrens zur Bestätigung einer digitalen Identität eines Nutzers 102 gegenüber einem Dienst-Computersystem 150. Ein Modul 192 des ID-Provider-Computersystems 136 berechnet in Schritt 502 für eine Menge von Attributwerten 190 jeweils ein Vertrauensniveau 198. In Schritt 504 empfängt das ID-Provider-Computersystem 136 eine Anfrage 194, 202 von einem Dienst-Computersystem 150, welches die digitale Identität eines Nutzers 102, welcher einen Dienst 156 angefragt hat, überprüfen soll. In Schritt 506 ermittelt das Modul 191 des ID-Provider-Computersystems ein oder mehrere Attributwerte V1, V2,..., die den in der Anfrage spezifizierten Attributen A1, A2,..., entsprechen und dem Nutzer 102 zugeordnet sind. Außerdem werden die Vertrauensniveaus, die diesen Attributwerten zugeordnet sind, ebenfalls ermittelt. In Schritt 508 sendet das ID-Provider-Computersystem eine Antwort 195, 204, die die ermittelten Attributwerte und deren zugeordnete Vertrauensniveaus enthält, an das Dienst-Computersystem 150. In Schritt 510 führt das Dienst-Computersystem eine Prüfung der digitalen Identität des Nutzers durch. Dies geschieht durch automatische Auswertung sowohl der in der Antwort enthaltenen Attributwerte als auch der jeweils zugeordneten Vertrauensniveaus. Entspricht das Vertrauensniveau einer oder mehrerer empfangener Attributwerte beispielsweise nicht einem als Referenz hinterlegten Mindestvertrauensniveau und/oder stimmen die Attributwerte beispielsweise nicht mit als Referenz hinterlegten Attributwerten überein, wird dem Nutzer 102 der Dienst nicht zur Verfügung gestellt.

### Bezugszeichenliste

- 100: Nutzer-Computersystem
- 102: Nutzer
- 104: Lesegerät
- 106: ID-Token
- 116: Netzwerk
- 136: ID-Provider-Computersystem
- 138: Netzwerkschnittstelle
- 140: Speichermedium
- 145: Prozessor
- 150: Dienst-Computersystem
- 152: Netzwerkschnittstelle
- 153: Speichermedium
- 154: Prozessor
- 156: Dienst
- 190: Attributwerte
- 190.1: manuell eingegebene Attributwerte
- 190.2: automatisch ausgelesene Attributwerte
- 191: Modul zur Ermittlung der Attributwerte
- 192: Modul zur Berechnung der Vertrauensniveaus
- 194, 202: Anfrage
- 195, 204: Antwort
- 196: grafische Benutzeroberfläche (GUI)
- 197: Modul zur Nutzerauthentifizierung
- 198: Vertrauensniveaus
- 199: Datenbank
- 304: Schnittstelle zum automatischen Auslesen von Attributwerten
- 306: Identifikator des ID-Provider Computersystems
- 402-408: Spalten
- 502-510: Schritte

## Patentansprüche

1. Computerimplementiertes Verfahren zur Bestätigung einer digitalen Identität eines Nutzers (102) gegenüber einem Dienst-Computersystem (150), umfassend:
- automatische Berechnung (502) eines Vertrauensniveaus (L1, L2, L3) jeweils für Attributwerte (V1, V2) von Attributen (A1, A2, 190) durch ein ID-Provider-Computersystem (136), wobei die digitale Identität des Nutzers mehrere der Attributwerte beinhaltet, wobei das Vertrauensniveau jeweils einen Grad der Verlässlichkeit der Zuordnung des Attributwertes zu dem Nutzer und/oder den Grad der Verlässlichkeit auf die Richtigkeit des Attributwertes angibt;
- Empfang (504) einer Anfrage (194, 202) zur Bestätigung der digitalen Identität des Nutzers, wobei die Anfrage durch das ID-Provider-Computersystem (136) von dem Dienst-Computersystem über ein Netzwerk (116) empfangen wird, wobei die Anfrage mehrere der Attribute (A1, A2) enthält;
- auf den Empfang der Anfrage, automatische Ermittlung (506) jeweils eines der Attributwerte (V1, V2) und jeweils berechneter Vertrauensniveaus für die mehreren Attribute der Anfrage durch das ID-Provider-Computersystem, wobei jeder der ermittelten Attributwerte dem Nutzer zugeordnet ist;
- Senden (508) einer Antwort (195, 204) von dem ID-Provider-Computersystem an das Dienst-Computersystem über das Netzwerk, wobei die Antwort die mehreren Attribute der Anfrage jeweils zumindest den ermittelten Attributwert (V1, V2) und das diesem zugeordnete Vertrauensniveau beinhaltet, wobei die Vertrauensniveaus ihrem jeweiligen Attributwert als Metadaten zugeordnet sind;
- Prüfung (510) der digitalen Identität des Nutzers durch das Dienst-Computersystem durch automatische Auswertung sowohl der in der Antwort enthaltenen Attributwerte als auch der jeweils zugeordneten Vertrauensniveaus.

2. Computerimplementiertes Verfahren nach Anspruch 1,
- wobei die Anfrage für die mehreren Attribute (A1, A2) der Anfrage jsweils ein Mindestvertrauensniveau spezifiziert; und
- wobei im Falle dessen, dass einem der in der Anfrage enthaltenen Attribute ein Attributwert mit zumindest dem Mindestvertrauensniveau zugeordnet ist, die Antwort diesen ermittelten Attributwert beinhaltet; und
- wobei im Falle dessen, dass einem der in der Anfrage enthaltenen Attribute kein Attributwert mit zumindest dem Mindestvertrauensniveau zugeordnet ist, die Antwort keinen Attributwert für dieses Attribut beinhaltet und/oder das Verfahren ferner umfasst: Senden einer Warnmeldung über die Nichtverfügbarkeit eines Attributwertes mit dem Mindestvertrauensniveau im Hinblick auf das eine Attribut an das Dienst-Computersystem durch das ID-Provider-Computersystem.

3. Computerimplementiertes Verfahren nach Anspruch 2, wobei das ID-Provider-Computersystem für eines der in der Anfrage enthaltenen Attribute mehrere Attributwerte mit zumindest dem Mindestvertrauensniveau ermittelt, umfassend:
- Feststellung durch das ID-Provider-Computersystem, ob es sich in einem ersten oder einem zweiten Konfigurationszustand befindet;
wobei im ersten Konfigurationszustand die Antwort des ID-Provider-Computersystems denjenigen Attributwert und dessen Vertrauensniveau beinhaltet, dem das höchste Vertrauensniveau zugeordnet ist,
wobei im zweiten Konfigurationszustand die Antwort des ID-Provider-Computersystems denjenigen Attributwert und dessen Vertrauensniveau beinhaltet, dem das geringste Vertrauensniveau, das dem Mindestniveau genügt, zugeordnet ist.

4. Computerimplementiertes Verfahren nach einem der vorigen Ansprüche,
- wobei die Berechnung der Vertrauensniveaus der Attributwerte in Reaktion auf den Empfang der Anfrage durchgeführt wird, oder
- wobei die Berechnung der Vertrauensniveaus der Attributwerte vor dem Empfang der Anfrage durchgeführt wird,
- ferner umfassend eine Speicherung der mehreren Attributwerte verknüpft mit den jeweils berechneten Vertrauensniveaus in einer Datenbank (199) durch das ID-Provider-Computersystem.

5. Computerimplementiertes Verfahren nach Anspruch 5, umfassend:
- Bereitstellung einer oder mehrerer Schnittstellen (196.1, 304.1) durch das ID-Provider-Computersystem;
- Empfang der Attributwerte über die eine oder die mehreren Schnittstellen durch das ID-Provider-Computersystem, wobei das ID-Provider-Computersystem erfasst, welche der einen oder der mehreren Schnittstellen zur Übertragung der empfangenen Attributwerte jeweils verwendet wurde;
wobei die Berechnung der Vertrauensniveaus der Attributwerte jeweils umfasst:
- automatische Feststellung, über welche der ein oder mehreren Schnittstellen der Attributwert empfangen wurde, wobei das berechnete Vertrauensniveau des Attributwertes um so höher ist, je stärker die zur Übertragung des Attributwerts verwendete Schnittstelle gegenüber Datenmanipulation geschützt ist.

6. Computerimplementiertes Verfahren nach einem der Ansprüche 5-6, wobei:
- die mehreren Schnittstellen eine erste Schnittstelle (196.1) zur manuellen Eingabe der Attributwerte und zur Übertragung der Attributwerte über das Netzwerk an das ID-Provider-Computersystem umfassen; und
- die mehreren Schnittstellen eine zweite Schnittstelle (304.1) zum Auslesen von einem oder mehreren der Attributwerte aus einem ID-Token über das Netzwerk durch das ID-Provider-Computersystem umfassen, wobei das ID-Token dem Nutzer zugeordnet ist;
ferner mit:
- Empfang einer ersten Teilmenge (190.1) der Attributwerte über die erste Schnittstelle durch das -Provider-Computersystem;
- Empfang einer zweiten Teilmenge (190.2) der Attributwerte über die zweite Schnittstelle durch das ID-Provider-Computersystem;
- wobei die Berechnung der Vertrauensniveaus derart erfolgt, dass das Vertrauensniveau von über die zweite Schnittstelle empfangenen Attributwerten höher ist als von über die erste Schnittstelle empfangenen Attributwerten.

7. Computerimplementiertes Verfahren nach Anspruch 6, umfassend:
- Speicherung der Attributwerte der ersten und zweiten Teilmenge durch das ID-Provider-Computersystem, wobei die Attributwerte mit ihren unter Berücksichtigung der jeweils zum Empfang verwendeten Schnittstellen berechneten Vertrauensniveaus verknüpft gespeichert werden;
- Bereitstellung der ersten Schnittstelle an den Nutzer zur Ermöglichung des manuellen Editierens der Attributwerte sowohl der ersten als auch der zweiten Teilmenge;
- Im Falle des manuellen Editierens eines der Attributwerte der zweiten Teilmenge, automatische Neuberechnung des Vertrauensniveaus des editierten Attributwertes derart, dass der editierte Attributwert behandelt wird, als wäre er über die erste Schnittstelle empfangen worden.

8. Computerimplementiertes Verfahren nach einem der vorigen Ansprüche, ferner mit:
- Authentifizierung des Nutzers gegenüber dem ID-Provider-Computersystem mittels eines Authentifizierungsverfahrens (197), um nach erfolgreicher Authentifizierung Attributwerte an das ID-Provider-Computersystem zu übertragen oder Attributwerte zu editieren, die bereits in einem an das ID-Provider-Computersystem operativ gekoppelten Speichermedium (199) gespeichert sind;
- Im Falle einer erfolgreichen Authentifizierung, automatische Erfassung, durch das ID-Provider Computersystem für jedes der übertragenen oder editierten Attributwerte, welches Authentifizierungsverfahren durchgeführt wurde;
wobei die Verlässlichkeit der Zuordnung des Attributwertes zu dem Nutzer von dem verwendeten Authentifizierungsverfahren abhängt,
wobei die berechneten Vertrauensniveaus der Attributwerte umso höher sind, je höher die Sicherheitsanforderungen des zur Übertragung oder zum Editieren des Attributwertes jeweils verwendeten Authentifizierungsverfahrens sind.

9. Computerimplementiertes Verfahren nach Anspruch 8, ferner mit:
- Bereitstellung, durch das ID-Provider-Computersystem, einer Vielzahl von Authentifizierungsverfahrenen, welche zumindest zwei der folgenden Authentifizierungsverfahren umfassen:
▪ Passwort-basierte Verfahren;
▪ ID-Token-basierte Verfahren; und
▪ Biometrische Authentifizierungsverfahren.

10. Computerimplementiertes Verfahren nach einem der Ansprüche 8-9, umfassend:
- Speicherung der Attributwerte, die nach einer erfolgreichen Authentifikation des Nutzers mittels eines ersten Authentifizierungsverfahrens übertragen oder editiert wurden, durch das ID-Provider-Computersystem, wobei die Attributwerte mit ihren jeweils unter Berücksichtigung des verwendeten ersten Authentifizierungsverfahrens berechneten Vertrauensniveaus verknüpft gespeichert werden;
- Erneute Authentifizierung des Nutzers gegenüber dem ID-Provider-Computersystem mittels eines zweiten Authentifizierungsverfahrens;
- Erfassen eines Überschreibens eines oder mehrerer bereits gespeicherter Attributwerte mit jeweils einem neuen Attributwert des Nutzers nach dessen erfolgreicher erneuter Authentifizierung;
- Automatische Neuberechnung des Vertrauensniveaus der neuen Attributwerte unter Berücksichtigung des verwendeten zweiten Authentifizierungsverfahrens.

11. Computerimplementiertes Verfahren nach einem der vorigen Ansprüche, wobei in die Berechnung des Vertrauensniveaus der jeweiligen Attributwerte eingeht:
- ein Sicherheitsgrad (408) der technischen Infrastruktur und/oder der organisatorischen Infrastruktur des ID-Provider-Computersystems, welche bei der Ermittlung des Attributwertes durch das ID-Provider-Computersystems verwendet werden, wobei die Integrität des Attributwertes und/oder der Identität des Nutzers und/oder Verlässlichkeit auf die Richtigkeit der Zuordnung von Attributwert und Nutzer durch den Sicherheitsgrad der technischen und/oder organisatorischen Infrastruktur bestimmt wird.

12. Computerimplementiertes Verfahren nach einem der vorigen Ansprüche, wobei das Sicherheitsniveau (L1-L5) eines Attributwerts berechnet wird in Abhängigkeit von:
- einem Indikator (404) der zur Übertragung oder zum Editieren des Attributwerts verwendeten Schnittstelle;
- einem Indikator (402) des für die Übertragung oder für das Editieren des Attributwerts verwendeten Authentifizierungsverfahrens;
- einem Indikator (408) des Sicherheitsgrades der technischen Infrastruktur nach Anspruch 12;
- einem Indikator des Sicherheitsgrades der organisatorischen Infrastruktur nach Anspruch 12;
- einem Indikator (406)des Betreibers des ID-Provider-Computersystems oder eines weiteren Dienst-Computersystems, von welchem die durch das ID-Provider-Computersystem ermittelten Attributwerte stammen;
- wobei jedes der Vertrauensniveau aus einer Menge von ein oder mehreren der oben genannten Indikatoren besteht oder wobei jedes der Vertrauensniveau ein einzelner Datenwert ist, welcher einer vordefinierten Sicherheitsstufe aus einer Menge von vordefinierten Sicherheitsstufen entspricht und aus einem oder einer beliebigen Kombination der oben genannten Indikatoren abgeleitet ist.

13. Computerimplementiertes Verfahren nach einem der vorigen Ansprüche, wobei das Mindestvertrauensniveau eines Attributwerts spezifiziert ist in Form von:
- einem Indikator einer oder mehrerer Schnittstellen, die zur Übertragung oder zum Editieren des Attributwerts verwendet wurden und als hinreichend gegen Datenmanipulation gesichert gelten;
- einem Indikator einer oder mehrerer für die Übertragung oder für das Editieren des Attributwerts verwendeten Authentifizierungsverfahrens die als hinreichend sicher gelten;
- einem Indikator des mindestens erforderlichen Sicherheitsgrades der technischen Infrastruktur nach Anspruch 12;
- einem Indikator des mindestens erforderlichen Sicherheitsgrades der organisatorischen Infrastruktur nach Anspruch 12;
- einem Indikator eines als vertrauenswürdig geltenden ID-Provider-Computersystem oder als Quelle von Attributwerten fungierenden Dienst-Computersystem;
- wobei das Mindestvertrauensniveau spezifiziert ist als ein einzelner Datenwert, welcher einer vordefinierten Sicherheitsstufe aus einer Menge von vordefinierten Sicherheitsstufen entspricht und aus einem oder mehreren der oben genannten Indikatoren abgeleitet ist, oder spezifiziert ist als eine Kombination mehrerer der oben genannten Indikatoren.

14. Computerimplementiertes Verfahren nach einem der Ansprüche 7-4, wobei das Auslesen der Attributwerte aus dem ID-Token durch das ID-Provider-Computersystem umfasst:
- Authentifizierung des ID-Token gegenüber dem ID-Provider-Computersystem,
- Authentifizierung des ID-Provider-Computersystems gegenüber dem ID-Token,
- nach erfolgreicher gegenseitiger Authentifizierung des ID-Tokens und des ID-Provider-Computersystems, Lesezugriff des ID-Provider-Computersystems auf ein oder mehrere in dem ID-Token gespeicherte Attributwerte;
- Signierung der ein oder mehreren gelesenen Attributwerte durch das ID-Provider-Computersystem;
- wobei die Antwort des ID-Provider-Computersystems ein Zertifikat beinhaltet, welches einen öffentlichen Schlüssel enthält, welches dem Dienst-Computer eine Prüfung der Signatur der aus dem ID-Token gelesenen Attribute ermöglicht.

15. Computerimplementiertes Verfahren zur Bestätigung einer digitalen Identität eines Nutzers (102) gegenüber einem Dienst-Computersystem (150), umfassend:
- automatische Berechnung eines Vertrauensniveaus (L1, L2, L3) jeweils für Attributwerte (V1, V2) von Attributen (A1, A2) durch ein ID-Provider-Computersystem, wobei die digitale Identität des Nutzers mehrere der Attributwerte beinhaltet, wobei das Vertrauensniveau jeweils einen Grad der Verlässlichkeit der Zuordnung des Attributwertes zu dem Nutzer und/oder den Grad der Verlässlichkeit auf die Richtigkeit des Attributwertes angibt;
- Empfang einer Anfrage (194, 202) zur Bestätigung der digitalen Identität des Nutzers durch ein ID-Provider-Computersystem (136) über ein Netzwerk (116) von dem Dienst-Computersystem, wobei die Anfrage mehrere der Attribute (A1, A2) enthält;
- auf den Empfang der Anfrage, Ermittlung jeweils eines Attributwertes (V1, V2) für die mehreren Attribute der Anfrage durch das ID-Provider-Computersystem, wobei jeder der ermittelten Attributwerte dem Nutzer zugeordnet ist, und Berechnung eines Vertrauensniveaus (L1, L2, L3) für jedes der ermittelten Attributwerte durch das ID-Provider-Computersystem, wobei das Vertrauensniveau jeweils einen Grad der Verlässlichkeit der Zuordnung des Attributwertes zu dem Nutzer und/oder den Grad der Verlässlichkeit auf die Richtigkeit des Attributwertes angibt;
- Senden einer Antwort (195, 204) von dem ID-Provider-Computersystem an das Dienst-Computersystem über das Netzwerk, wobei die Antwort für die mehreren Attribute der Anfrage zumindest den ermittelten Attributwert (V1, V2) und das diesem zugeordnete Vertrauensniveau beinhaltet, wobei die Vertrauensniveaus ihrem jeweiligen Attributwert als Metadaten zugeordnet sind.

16. Computerimplementiertes Verfahren zur Bestätigung einer digitalen Identität eines Nutzers (102) gegenüber einem Dienst-Computersystem (150), umfassend:
- Senden einer Anfrage (194, 202) zur Bestätigung der digitalen Identität des Nutzers durch ein Dienst-Computersystem über ein Netzwerk (116) an ein ID-Provider-Computersystem, wobei die Anfrage mehrere Attribute (A1, A2) enthält, wobei die digitale Identität des Nutzers Attributwerte dieser Attribute beinhaltet;
- Empfang einer Antwort (195, 204) auf die Anfrage durch das Dienst-Computersystem, wobei die Antwort von dem ID-Provider-Computersystem über das Netzwerk empfangen wird, wobei die Antwort einen Attributwert (V1, V2) für die mehreren in der Anfrage enthaltenen Attribute umfasst, wobei jeder der Attributwerte dem Nutzer zugeordnet ist, wobei die Antwort für ein oder mehrere der Attributwerte jeweils ein Vertrauensniveau (L1, L2, L3) umfasst, wobei das Vertrauensniveau jeweils einen Grad der Verlässlichkeit der Zuordnung des Attributwertes zu dem Nutzer und/oder den Grad der Verlässlichkeit auf die Richtigkeit des Attributwertes angibt; und
- Prüfung (510) der digitalen Identität des Nutzers durch das Dienst-Computersystem durch automatische Auswertung sowohl der in der Antwort enthaltenen Attributwerte als auch der jeweils zugeordneten Vertrauensniveaus.

17. Dienst-Computersystem (150), beinhaltend:
- eine Netzwerkschnittstelle (152);
- einen Prozessor (154); und
- ein computerlesbares Speichermedium (153), wobei das Speichermedium computerinterpretierbare Instruktionen beinhaltet, welche bei Ausführung durch den Prozessor dazu in der Lage sind, ein Verfahren nach Anspruch 16 auszuführen.

18. ID-Provider-Computersystem (136), beinhaltend:
- eine Netzwerkschnittstelle (138);
- einen Prozessor (145); und
- ein computerlesbares Speichermedium (140), wobei das Speichermedium computerinterpretierbare Instruktionen beinhaltet, welche bei Ausführung durch den Prozessor dazu in der Lage sind, ein Verfahren zur Bestätigung einer digitalen Identität eines Nutzers (102) gegenüber einem Dienst-Computersystem (150) nach Anspruch 15 auszuführen.

19. ID-Token (106), das einem Nutzer (102) zugeordnet ist, beinhaltend:
- einen Prozessor; und
- ein Sicherheitselement;
- einen Speicher mit computerausführbaren Instruktionen;
- wobei das ID-Token bei Ausführung der Instruktionen durch den Prozessor dazu ausgebildet ist,
▪ nach erfolgreicher Authentifizierung des Nutzers und eines ID-Provider-Computersystem gegenüber dem ID-Token mehrere Attributwerte des Nutzers von dem ID-Provider-Computersystem anzufordern und diese zusammen mit ihnen jeweils zugeordneten Vertrauensniveaus zu empfangen und in dem Sicherheitselement zu speichern; und
▪ in Reaktion auf Erhalt einer Anfrage des Dienst-Computersystems, die ein oder mehrere der Attribute enthält, die für diese Attribute im Sicherheitselement gespeicherten Attributwerte und deren jeweils zugeordnete Vertrauensniveaus aus dem Sicherheitselement zu lesen und an das Dienst-Computersystem zu übertragen.

## Claims

1. A computer-implemented method for confirming a digital identity of a user (102) to a service computer system (150), comprising:
- automatically calculating (502) a trust level (L1, L2, L3) for attribute values (V1, V2) of attributes (A1, A2, 190) by an ID provider computer system (136), wherein the digital identity of the user includes a plurality of the attribute values, wherein the trust level in each case specifies a degree of reliability of the assignment of the attribute value to the user and/or the degree of reliability of the correctness of the attribute value;
- receiving (504) a request (194, 202) to confirm the digital identity of the user, wherein the request is received by the ID provider computer system (136) from the service computer system via a network (116), wherein the request contains a plurality of the attributes (A1, A2);
- upon receipt of the request, automatically determining (506), in each case, one of the attribute values (V1, V2) and calculated trust levels for the plurality of attributes of the request by the ID provider computer system, wherein each of the determined attribute values is assigned to the user;
- sending (508) a reply (195, 204) from the ID provider computer system to the service computer system via the network, wherein the reply includes the plurality of attributes of the request and for each attribute at least the determined attribute value (V1, V2), and the trust level assigned thereto, wherein the trust levels are each assigned to their corresponding attribute value as metadata;
- checking (510) the digital identity of the user by the service computer system by automatic analysis both of the attribute values contained in the reply and, in each case, the assigned trust level.

2. The computer-implemented method according to claim 1,
- wherein the request for the plurality of attributes (A1, A2) of the request in each case specifies a minimum trust value; and
- wherein, in the event that one of the attributes contained in the request is assigned an attribute value with at least the minimum trust level, the reply includes this determined attribute value; and
- wherein, in the event that one of the attributes contained in the request is not assigned an attribute value with at least the minimum trust level, the reply does not include an attribute value for this attribute and/or the method further comprises: sending a warning message regarding the lack of availability of an attribute value with the minimum trust level in respect of the one attribute to the service computer system by the ID provider computer system.

3. The computer-implemented method according to claim 2, wherein the ID provider computer system determines a plurality of attribute values with at least the minimum trust level for one of the attributes contained in the request, comprising:
- determining, by the ID provider computer system, whether it is in a first or a second configuration state;
wherein, in the first configuration state, the reply of the ID provider computer system includes the attribute value and trust level thereof that is assigned the highest trust level,
wherein, in the second configuration state, the reply of the ID provider computer system includes the attribute value and trust level thereof that is assigned the lowest trust level satisfying the minimum level.

4. The computer-implemented method according to any one of the preceding claims,
- wherein the calculation of the trust levels of the attribute values is performed in response to the receipt of the request, or
- wherein the calculation of the trust levels of the attribute values is performed before receipt of the request,
- further comprising a storing of the plurality of attribute values linked with the corresponding calculated trust levels in a database (199) by the ID provider computer system.

5. The computer-implemented method according to claim 5, comprising:
- providing one or more interfaces (196.1, 304.1) by the ID provider computer system;
- receiving the attribute values via the one or more interfaces by the ID provider computer system, wherein the ID provider computer system detects which of the one or more interfaces was used for the transmission of the received attribute values;
wherein the calculation of the trust levels of the attribute values in each case comprises:
- automatically determining via which of the one or more interfaces the attribute value was received, wherein the calculated trust level of the attribute value is all the higher, the stronger is the protection against data manipulation of the interface used for transmission of the attribute value.

6. The computer-implemented method according to any one of claims 5-6, wherein:
- the plurality of interfaces comprise a first interface (196.1) for manually inputting the attribute values and for transmitting the attribute values via the network to the ID provider computer system; and
- the plurality of interfaces comprise a second interface (304.1) for reading one or more of the attribute values from an ID token via the network by the ID provider computer system, wherein the ID token is assigned to the user;
further comprising:
- receiving a first subset (190.1) of the attribute values via the first interface by the ID provider computer system;
- receiving a second subset (190.2) of the attribute values via the second interface by the ID provider computer system;
- wherein the trust levels are calculated in such a way that the trust level of attribute values received via the second interface is higher than of attribute values received via the first interface.

7. The computer-implemented method according to claim 6, comprising:
- storing the attribute values of the first and second subset by the ID provider computer system, wherein the attribute values are stored linked to their trust levels calculated under consideration of the corresponding interfaces used for receipt;
- providing the first interface to the user in order to enable manual editing of the attribute values both of the first and the second subset;
- in the case of manual editing of one of the attribute values of the second subset, automatically recalculating the trust level of the edited attribute value in such a way that the edited attribute value is treated as if it had been received via the first interface.

8. The computer-implemented method according to any one of the preceding claims, further comprising:
- authenticating the user to the ID provider computer system by means of an authentication method (197) in order to, following successful authentication, transmit attribute values to the ID provider computer system or edit attribute values that are already stored in a storage medium (199) operatively coupled to the ID provider computer system;
- in the event of successful authentication, automatically detecting, by the ID provider computer system, which authentication method was performed, for each of the transmitted or edited attribute values;
wherein the reliability of the assignment of the attribute value to the user is dependent on the used authentication method, wherein the calculated trust levels of the attribute values are all the higher, the higher are the security requirements of the authentication method used to transmit or to edit the attribute value.

9. The computer-implemented method according to claim 8, further comprising:
- providing, by the ID provider computer system, a plurality of authentication methods, which comprise at least two of the following authentication methods:
▪ password based method;
▪ ID token-based method; and
▪ biometric authentication method.

10. The computer-implemented method according to any one of claims 8-9, comprising:
- storing the attribute values, by the ID provider computer system, that were transmitted or edited following successful authentication of the user by means of a first authentication method, wherein the attribute values are stored linked with their trust levels calculated in each case under consideration of the used first authentication method;
- authenticating the user again to the ID provider computer system by means of a second authentication method;
- detecting an overwriting of one or more already stored attribute values by a new attribute value of the user following successful renewed authentication of the user;
- automatically recalculating the trust level of the new attribute values under consideration of the used second authentication method.

11. The computer-implemented method according to any one of the preceding claims, wherein the calculation of the trust level of the attribute values includes:
- a security level (408) of the technical infrastructure and/or the organisational infrastructure of the ID provider computer system which are used when determining the attribute value by the ID provider computer system, wherein the integrity of the attribute value and/or the identity of the user and/or reliability of the correctness of the assignment of attribute value to user is determined by the security level of the technical and/or organisational infrastructure.

12. The computer-implemented method according to any one of the preceding claims, wherein the security level (L1-L5) of an attribute value is calculated depending on:
- an indicator (404) of the interface used to transmit or to edit the attribute value;
- an indicator (402) of the authentication method used for the transmission or for the editing of the attribute value;
- an indicator (408) of the security level of the technical infrastructure according to claim 12;
- an indicator of the security level of the organisational infrastructure according to claim 12;
- an indicator (406) of the operator of the ID provider computer system or a further service computer system from which the attribute values determined by the ID provider computer system originate;
- wherein each of the trust levels consists of a set of one or more of the above-mentioned indicators, wherein each of the trust levels is an individual data value, which corresponds to a predefined security stage from a set of predefined security stages and is derived from one or any combination of the above-mentioned indicators.

13. The computer-implemented method according to any one of the preceding claims, wherein the minimum trust level of an attribute value is specified in the form of:
- an indicator of one or more interfaces used to transmit or to edit the attribute value and deemed to be sufficiently secured against data manipulation;
- an indicator of one or more authentication methods used for the transmission or for the editing of the attribute value and deemed to be sufficiently secure;
- an indicator of the least necessary security level of the technical infrastructure according to claim 12;
- an indicator of the least necessary security level of the organisational infrastructure according to claim 12;
- an indicator of an ID provider computer system deemed to be trustworthy or service computer system functioning as a source of attribute values;
- wherein the minimum trust level is specified as an individual data value which corresponds to a predefined security level from a set of predefined security levels and is derived from one or more of the above-mentioned indicators, or is specified as a combination of a plurality of the above-mentioned indicators.

14. The computer-implemented method according to any one of claims 7-4, wherein the reading of the attribute values from the ID token by the ID provider computer system comprises:
- authenticating the ID token to the ID provider computer system,
- authenticating the ID provider computer system to the ID token,
- following successful mutual authentication of the ID token and ID provider computer system, granting read access for the ID provider computer system to one or more of the attribute values stored in the ID token;
- signing the one or more read attribute values by the ID provider computer system;
- wherein the reply of the ID provider computer system includes a certificate which contains a public key which allows the service computer to check the signature of the attributes read from the ID token.

15. A computer-implemented method for confirming a digital identity of a user (102) to a service computer system (150), comprising:
- automatically calculating a trust level (L1, L2, L3) for attribute values (V1, V2) of attributes (A1, A2) by an ID provider computer system, wherein the digital identity of the user includes a plurality of the attribute values, wherein the trust level in each case specifies a degree of the reliability of the assignment of the attribute value to the user and/or the degree of reliability of the correctness of the attribute value;
- receiving a request (194, 202) to confirm the digital identity of the user by an ID provider computer system (136) via a network (116) from the service computer system, wherein the request contains a plurality of the attributes (A1, A2);
- upon receipt of the request, determining an attribute value (V1, V2) for each of the plurality of attributes of the request by the ID provider computer system, wherein each of the determined attribute values is assigned to the user, and calculating a trust level (L1, L2, L3) for each of the determined attribute values by the ID provider computer system, wherein the trust level in each case specifies a degree of the reliability of the assignment of the attribute value to the user and/or the degree of reliability of the correctness of the attribute value;
- sending a reply (195, 204) from the ID provider computer system to the service computer system via the network, wherein the reply for the plurality of attributes of the request includes at least the determined attribute value (V1, V2) and the trust level assigned thereto, wherein the trust levels are each assigned their corresponding attribute value as metadata.

16. A computer-implemented method for confirming a digital identity of a user (102) to a service computer system (150), comprising:
- sending a request (194, 202) to confirm the digital identity of the user by a service computer system via a network (116) to an ID provider computer system, wherein the request contains a plurality of attributes (A1, A2), wherein the digital identity of the user includes attribute values of these attributes;
- receiving a reply (195, 204) to the request by the service computer system, wherein the reply is received from the ID provider computer system via the network, wherein the reply comprises an attribute value (V1, V2) for the plurality of attributes contained in the request, wherein each of the attribute values is assigned to the user, wherein the reply for one or more of the attribute values in each case comprises a trust level (L1, L2, L3), wherein the trust level in each case indicates a degree of the reliability of the assignment of the attribute value to the user and/or the degree of reliability of the correctness of the attribute value; and
- checking (510) the digital identity of the user by the service computer system by automatic analysis of both the attribute values contained in the reply and the assigned trust levels.

17. A service computer system (150), including:
- a network interface (152);
- a processor (154); and
- a computer-readable storage medium (153), wherein the storage medium includes computer-interpretable instructions, which, when executed by the processor, are capable of carrying out a method according to claim 16.

18. An ID provider computer system (136), including:
- a network interface (138);
- a processor (145); and
- a computer-readable storage medium (140), wherein the storage medium includes computer-interpretable instructions, which, when executed by the processor, are capable of carrying out a method for confirming a digital identity of a user (102) to a service computer system (150) according to claim 15.

19. An ID token (106), which is assigned to a user (102), including:
- a processor; and
- a security element;
- a memory with computer-executable instructions;
- wherein the ID token, when the instructions are executed by the processor, is designed
▪ following successful authentication of the user and of an ID provider computer system to the ID token, to request a plurality of attribute values of the user from the ID provider computer system and to receive these together with their assigned trust levels and to store them in the security element; and
▪ in response to receiving a request of the service computer system containing one or more attributes, to read the attribute values stored for these attributes in the security element, and their assigned trust levels, from the security element and to transmit them to the service computer system.

## Revendications

1. Procédé mis en œuvre par ordinateur permettant la confirmation d'une identité numérique d'un utilisateur (102) vis-à-vis d'un système informatique de service (150), comprenant :
- le calcul automatique (502) d'un niveau de confiance (L1, L2, L3) respectivement pour des valeurs d'attributs (V1, V2) d'attributs (A1, A2, 190) par un système informatique de fournisseur d'ID (136), où l'identité numérique de l'utilisateur contient plusieurs parmi les valeurs d'attributs, où le niveau de confiance indique respectivement un degré de fiabilité de l'association de la valeur d'attribut avec l'utilisateur et/ou le degré de fiabilité de l'exactitude de la valeur d'attribut ;
- la réception (504) d'une demande (194, 202) pour la confirmation de l'identité numérique de l'utilisateur, où la demande est reçue par le système informatique de fournisseur d'ID (136) à partir du système informatique de service par le biais d'un réseau (116), où la demande contient plusieurs attributs (A1, A2) ;
- suite à la réception de la demande, la détermination automatique (506) respectivement d'une des valeurs d'attributs (V1, V2) et respectivement d'un niveau de confiance calculé pour les nombreux attributs de la demande par le système informatique de fournisseur d'ID, où chacune des valeurs d'attributs déterminées est associée à l'utilisateur ;
- l'envoi (508) d'une réponse (195, 204) du système informatique de fournisseur d'ID au système informatique de service par le biais du réseau, où la réponse contient les nombreux attributs de la demande, respectivement au moins la valeur d'attribut (V1, V2) déterminée et le niveau de confiance associé à celle-ci, où les niveaux de confiance sont associé à leur valeur d'attribut respective sous forme de métadonnées ;
- la vérification (510) de l'identité numérique de l'utilisateur par le système informatique de service par une évaluation automatique à la fois des valeurs d'attributs contenues dans la réponse et également du niveau de confiance respectivement associé.

2. Procédé mis en œuvre par ordinateur selon la revendication 1,
- dans lequel la demande spécifie respectivement un niveau de confiance minimal pour les nombreux attributs (A1, A2) de la demande ; et
- dans lequel, dans le cas où, pour un des attributs reçus dans la demande, une valeur d'attribut avec au moins le niveau de confiance minimal est associé, la réponse contient cette valeur d'attribut déterminée ; et
- dans lequel, dans le cas où, pour un des attributs reçus dans la demande, aucune valeur d'attribut n'est associée avec au moins le niveau de confiance minimal, la réponse ne contient aucune valeur d'attribut pour cet attribut et/ou le procédé comprend en outre : l'envoi d'un message d'avertissement concernant l'indisponibilité d'une valeur d'attribut avec le niveau de confiance minimal en relation avec l'attribut en question au système informatique de service par le système informatique de fournisseur d'ID.

3. Procédé mis en œuvre par ordinateur selon la revendication 2, dans lequel le système informatique de fournisseur d'ID détermine plusieurs valeurs d'attributs avec au moins un niveau de confiance minimal pour un des attributs reçus dans la demande, comprenant :
- le constat, par le système informatique de fournisseur d'ID, qu'il se trouve dans un premier ou un deuxième état de configuration ;
où, dans le premier état de configuration, la réponse du système informatique de fournisseur d'ID contient la valeur d'attribut en question et son niveau de confiance, auquel le niveau de confiance le plus élevé est associé,
où, dans le deuxième état de configuration, la réponse du système informatique de fournisseur d'ID contient la valeur d'attribut en question et son niveau de confiance auquel le niveau de confiance le plus faible qui suffit au niveau minimal est associé.

4. Procédé mis en œuvre par ordinateur selon l'une des revendications précédentes,
- dans lequel le calcul du niveau de confiance des valeurs d'attributs est effectué en réaction suite à la réception de la demande, ou
- dans lequel le calcul du niveau de confiance des valeurs d'attributs est effectué avant la réception de la demande,
- comprenant en outre un stockage des nombreuses valeurs d'attributs, conjugué avec les niveaux de confiance respectivement calculés, dans une banque de données (199) par le système informatique de fournisseur d'ID.

5. Procédé mis en œuvre par ordinateur selon la revendication 5, comprenant :
- la mise à disposition d'une ou de plusieurs interfaces (196.1, 304.1) par le système informatique de fournisseur d'ID ;
- la réception des valeurs d'attributs par le système informatique de fournisseur d'ID par le biais de l'interface ou des interfaces, où le système informatique de fournisseur d'ID détecte laquelle parmi l'interface ou les interfaces a été respectivement employée pour la transmission des valeurs d'attributs reçues ; où le calcul du niveau de confiance des valeurs d'attributs comprend respectivement :
- une détermination automatique par laquelle parmi l'interface ou les interfaces la valeur d'attribut a été reçue, où le niveau de confiance de la valeur d'attribut calculé est d'autant plus élevé que l'interface employée pour la transmission de la valeur d'attribut est plus fortement protégée contre la manipulation de données.

6. Procédé mis en œuvre par ordinateur selon l'une des revendications 5 ou 6, dans lequel :
- les nombreuses interfaces comprennent une première interface (196.1) pour la saisie manuelle des valeurs d'attributs et pour la transmission des valeurs d'attributs au système informatique de fournisseur d'ID par le biais du réseau ; et
- les nombreuses interfaces comprennent une deuxième interface (304.1) pour la lecture d'une ou de plusieurs parmi les valeurs d'attributs à partir d'un jeton d'ID par le biais du réseau par le système informatique de fournisseur d'ID, où le jeton d'ID est associé à l'utilisateur ;
en outre avec :
- la réception d'une première quantité partielle (190.1) des valeurs d'attributs par le système informatique de fournisseur d'ID par le biais de la première interface ;
- la réception d'une deuxième quantité partielle (190.2) des valeurs d'attributs par le système informatique de fournisseur d'ID par le biais de la deuxième interface ;
- où le calcul du niveau de confiance a lieu de telle manière que le niveau de confiance des valeurs d'attributs reçues par le biais de la deuxième interface est plus élevé que celui des valeurs d'attributs reçues par le biais de la première interface.

7. Procédé mis en œuvre par ordinateur selon la revendication 6, comprenant :
- le stockage des valeurs d'attributs des première et deuxième quantités partielles par le système informatique de fournisseur d'ID, où les valeurs d'attributs sont stockées, reliées avec leur niveau de confiance calculé, en tenant compte des interfaces employées respectivement pour la réception ;
- la mise à disposition de la première interface pour l'utilisateur pour permettre l'édition manuelle des valeurs d'attributs ainsi que de la première et de la deuxième quantité partielle ;
- dans le cas de l'édition manuelle d'une des valeurs d'attributs de la deuxième quantité partielle, un nouveau calcul automatique du niveau de confiance de la valeur d'attribut éditée de sorte que la valeur d'attribut éditée est traitée comme si elle avait été reçue par le biais de la première interface.

8. Procédé mis en œuvre par ordinateur selon l'une des revendications précédentes, en outre avec
- l'authentification de l'utilisateur vis-à-vis du système informatique de fournisseur d'ID au moyen d'un procédé d'authentification (197) afin de transmettre des valeurs d'attributs au système informatique de fournisseur d'ID après une authentification réussie ou éditer les valeurs d'attributs qui sont déjà stockées dans un support de mémoire (199) couplé de manière opérationnelle au système informatique de fournisseur d'ID ;
- dans le cas d'une authentification réussie, la détection automatique, par le système informatique de fournisseur d'ID, pour chacune des valeurs d'attributs transmises ou éditées, du procédé d'authentification qui a été effectué ;
où la fiabilité de l'association de la valeur d'attribut avec l'utilisateur dépend du procédé d'authentification employé,
où le niveau de confiance des valeurs d'attributs calculé est d'autant plus élevé que les exigences de sécurité du procédé d'authentification respectivement employé pour la transmission ou l'édition de la valeur d'attribut sont élevées.

9. Procédé mis en œuvre par ordinateur selon la revendication 8, en outre avec :
- la mise à disposition, par le système informatique de fournisseur d'ID, d'une multiplicité de procédés d'authentification, lesquels comprennent au moins deux des procédés d'authentification suivants :
▪ des procédés basés sur un mot de passe ;
▪ des procédés basés sur un jeton d'ID ; et
▪ des procédés d'authentification biométriques.

10. Procédé mis en œuvre par ordinateur selon l'une des revendications 8 ou 9, comprenant :
- le stockage des valeurs d'attributs qui ont été transmises ou éditées après une authentification réussie de l'utilisateur au moyen d'un premier procédé d'authentification par le système informatique de fournisseur d'ID, où les valeurs d'attributs sont stockées, reliées avec leur niveau de confiance calculé respectivement, en prenant compte le premier procédé d'authentification employé ;
- une nouvelle authentification de l'utilisateur vis-à-vis du système informatique de fournisseur d'ID au moyen d'un deuxième procédé d'authentification ;
- la saisie d'un écrasement d'une ou de plusieurs valeurs d'attributs déjà stockées avec respectivement une nouvelle valeur d'attribut de l'utilisateur après son authentification renouvelée réussie ;
- le nouveau calcul automatique du niveau de confiance des nouvelles valeurs d'attributs en tenant compte du deuxième procédé d'authentification employé.

11. Procédé mis en œuvre par ordinateur selon l'une des revendications précédentes, dans lequel, dans le calcul du niveau de confiance des valeurs d'attributs respectives, on prête attention :
- à un niveau de sécurité (408) de l'infrastructure technique et/ou de l'infrastructure organisationnelle du système informatique de fournisseur d'ID, lesquelles ont été employées par le système informatique de fournisseur d'ID lors de la détermination de la valeur d'attribut, où l'intégrité de la valeur d'attribut, et/ou l'identité de l'utilisateur, et/ou la fiabilité de l'exactitude de l'association de la valeur d'attribut et de l'utilisateur, est déterminée par le niveau de sécurité de l'infrastructure technique et/ou organisationnelle.

12. Procédé mis en œuvre par ordinateur selon l'une des revendications précédentes, dans lequel le niveau de sécurité (L1 à L5) d'une valeur d'attribut est calculé en fonction :
- d'un indicateur (404) de l'interface employée pour la transmission ou l'édition de la valeur d'attribut ;
- d'un indicateur (402) du procédé d'authentification employé pour la transmission ou pour l'édition de la valeur d'attribut ;
- d'un indicateur (408) du niveau de sécurité de l'infrastructure technique selon la revendication 12 ;
- d'un indicateur du niveau de sécurité de l'infrastructure organisationnelle selon la revendication 12 ;
- d'un indicateur (406) de l'exploitant du système informatique de fournisseur d'ID ou d'un autre système informatique de service, d'où proviennent les valeurs d'attributs déterminées par le système informatique de fournisseur d'ID ;
- où chacun des niveaux de confiance est constitué d'une quantité d'un ou de plusieurs des indicateurs cités ci-dessus ou où chacun des niveaux de confiance est une valeur de donnée individuelle, laquelle correspond à un échelon de sécurité prédéfini parmi une quantité d'échelons de sécurité prédéfinis et est dérivée d'un indicateur ou d'une combinaison quelconque des indicateurs cités ci-dessus.

13. Procédé mis en œuvre par ordinateur selon l'une des revendications précédentes, dans lequel le niveau de confiance minimal d'une valeur d'attribut est spécifié sous la forme :
- d'un indicateur d'une ou de plusieurs interfaces qui ont été employées pour la transmission ou l'édition de la valeur d'attribut et qui sont réputées être sécurisées suffisamment contre la manipulation de données ;
- d'un indicateur d'un ou de plusieurs procédés d'authentification employés pour la transmission ou pour l'édition de la valeur d'attribut qui sont réputés être suffisamment sûrs ;
- d'un indicateur de l'au moins un niveau de sécurité nécessaire de l'infrastructure technique selon la revendication 12 ;
- d'un indicateur de l'au moins un niveau de sécurité nécessaire de l'infrastructure organisationnelle selon la revendication 12 ;
- d'un indicateur d'un système informatique de fournisseur d'ID réputé être digne de confiance ou d'un système informatique de service fonctionnant en tant que source de valeurs d'attributs ;
- où le niveau de confiance minimal est spécifié sous la forme d'une valeur de donnée individuelle, laquelle correspond à un échelon de sécurité prédéfini parmi une quantité d'échelons de sécurité prédéfinis et est dérivée d'un ou de plusieurs parmi les indicateurs cités ci-dessus ou est spécifiée comme une combinaison de plusieurs des indicateurs cités ci-dessus.

14. Procédé mis en œuvre par ordinateur selon l'une des revendications 7 à 4, dans lequel la lecture des valeurs d'attributs à partir du jeton d'ID par le système informatique de fournisseur d'ID comprend :
- l'authentification du jeton d'ID vis-à-vis du système informatique de fournisseur d'ID,
- l'authentification du système informatique de fournisseur d'ID vis-à-vis du jeton d'ID,
- après l'authentification réciproque réussie du jeton d'ID et du système informatique de fournisseur d'ID, l'accès en lecture du système informatique de fournisseur d'ID à une ou plusieurs valeurs d'attributs stockées dans le jeton d'ID ;
- la signature de l'attribut ou des attributs lus par le système informatique de fournisseur d'ID ;
où la réponse du système informatique de fournisseur d'ID contient un certificat, lequel contient une clé publique, laquelle permet au système informatique de service une vérification de la signature des attributs lus à partir du jeton d'ID.

15. Procédé mis en œuvre par ordinateur pour la confirmation d'une identité numérique d'un utilisateur (102) vis-à-vis d'un système informatique de service (150), comprenant :
- le calcul automatique (502) d'un niveau de confiance (L1, L2, L3) respectivement pour des valeurs d'attributs (V1, V2) d'attributs (A1, A2) par un système informatique de fournisseur d'ID, où l'identité numérique de l'utilisateur contient plusieurs parmi les valeurs d'attributs, où le niveau de confiance indique respectivement un degré de fiabilité de l'association de la valeur d'attribut avec l'utilisateur et/ou le degré de fiabilité de l'exactitude de la valeur d'attribut ;
- la réception d'une demande (194, 202) pour la confirmation de l'identité numérique de l'utilisateur par le système informatique de fournisseur d'ID (136) à partir du système informatique de service par le biais d'un réseau (116), où la demande contient plusieurs attributs (A1, A2) ;
- suite à la réception de la demande, la détermination respectivement d'une des valeurs d'attributs (V1, V2) pour les nombreux attributs de la demande par le système informatique de fournisseur d'ID, où chacune des valeurs d'attributs déterminées est associée à l'utilisateur, et le calcul d'un niveau de confiance (L1, L2, L3) pour chacune des valeurs d'attributs déterminées par le système informatique de fournisseur d'ID, où le niveau de confiance indique respectivement un degré de la fiabilité de l'association de la valeur d'attribut avec l'utilisateur, et/ou le degré de fiabilité de l'exactitude de la valeur d'attribut ;
- l'envoi d'une réponse (195, 204) du système informatique de fournisseur d'ID au système informatique de service par le biais du réseau, où la réponse contient les nombreux attributs de la demande de l'au moins une valeur d'attribut (V1, V2) déterminée et le niveau de confiance associé à celle-ci, où le niveau de confiance est associé à sa valeur d'attribut respective sous forme de métadonnées.

16. Procédé mis en œuvre par ordinateur pour la confirmation d'une identité numérique d'un utilisateur (102) vis-à-vis d'un système informatique de service (150), comprenant :
- l'envoi d'une demande (194, 202) pour la confirmation de l'identité numérique de l'utilisateur par un système informatique de service à un système informatique de fournisseur d'ID par le biais d'un réseau (116), où la demande contient plusieurs attributs (A1, A2), où l'identité numérique de l'utilisateur contient des valeurs d'attributs de ces attributs ;
- la réception d'une réponse (195, 204) suite à la demande du système informatique de service, où la réponse est reçue par le système informatique de fournisseur d'ID par le biais du réseau, où la réponse contient une valeur d'attribut (V1, V2) pour les nombreux attributs contenus dans la demande, où chacune des valeurs d'attribut est associée à l'utilisateur, où la réponse pour une ou plusieurs des valeurs d'attributs comprend respectivement un niveau de confiance (L1, L2, L3), où le niveau de confiance indique respectivement un degré de fiabilité de l'association de la valeur d'attribut à l'utilisateur, et/ou le degré de fiabilité de l'exactitude de la valeur d'attribut ; et
- la vérification (510) de l'identité numérique de l'utilisateur par le système informatique de service par une évaluation automatique à la fois des valeurs d'attributs contenues dans la réponse et également du niveau de confiance respectivement associé.

17. Système informatique de service (150) contenant :
- une interface réseau (152) ;
- un processeur (154) ; et
- un support de stockage lisible informatiquement (153), où le support de stockage contient des instructions interprétables par ordinateur, lesquelles, lors de l'exécution par le processeur, sont en mesure d'exécuter un procédé selon la revendication 16.

18. Système informatique de fournisseur d'ID (136) contenant :
- une interface réseau (138) ;
- un processeur (145) ; et
- un support de stockage lisible informatiquement (140), où le support de stockage contient des instructions interprétables par ordinateur, lesquelles, lors de l'exécution par le processeur, sont en mesure d'exécuter un procédé de confirmation d'une identité numérique d'un utilisateur (102) vis-à-vis d'un système informatique de service (150) selon la revendication 15.

19. Jeton d'ID (106) qui est associé à un utilisateur (102), contenant :
- un processeur ; et
- un élément de sécurité ;
- une mémoire avec des instructions exécutables par ordinateur ;
- où le jeton d'ID, lors de l'exécution des instructions par le processeur est conçu pour,
▪ après l'authentification réussie de l'utilisateur et d'un système informatique de fournisseur d'ID vis-à-vis du jeton d'ID, requérir plusieurs valeurs d'attributs de l'utilisateur auprès du système informatique de fournisseur d'ID et pour réceptionner celles-ci conjointement avec leur niveau de confiance respectivement associé et les stocker dans l'élément de sécurité ; et
▪ en réaction à l'obtention d'une demande du système informatique de service qui contient un ou plusieurs des attributs, lire les valeurs d'attributs stockées pour ces attributs dans l'élément de sécurité et leur niveau de sécurité respectivement associé à partir de l'élément de sécurité et pour les transmettre au système informatique de service.
